# FASCICULE DE BREVET EUROPEEN

(11) **EP 0 481 901 B1**
(45) Date de publication et mention de la délivrance du brevet: **12.07.1995**
(21) Numéro de dépôt: 91420363.3
(22) Date de dépôt: 15.10.1991
(51) Int. Cl.: H01R 43/28

(54) **Procédés et dispositifs pour connecter automatiquement des extrémités de tronçons de fils conducteurs ou de fibres optiques à des réceptacles adaptés de composants**
Verfahren und Anordnungen zur automatischen Verbindung von Abschnittsenden von Leiterdrähten oder optischen Fasern an angepasste Buchsen von Komponenten
Processes and devices for automatic connection of section terminals of conductor wires or optical fibres to matched receptacles of components

(30) Priorité: 17.10.1990 FR 9013137; 17.10.1990 FR 9013138; 17.10.1990 FR 9013139
(43) Date de publication de la demande: 22.04.1992
(73) Titulaire: WHITAKER CORPORATION, Wilmington, Delaware 19808 (US)
(72) Inventeur: Ricard, Claude, F-13100 Aix-en-Provence (FR)
(74) Mandataire: Wind, Jacques

(56) Documents cités:
- EP-A- 0 174 050
- EP-A- 0 286 208
- EP-A- 0 302 804
- EP-A- 0 305 307
- FR-A- 2 555 397
- FR-A- 2 607 653

## Description

La présente invention a pour objet des procédés et des dispositifs pour connecter automatiquement des extrémités de tronçons de fils conducteurs ou de fibres optiques à des réceptacles adaptés de composants.

Le secteur technique de l'invention est celui de la construction de machines automatiques de câblage.

La demande de brevet FR-A-2.607.653, déposée le 28 novembre 1986 décrit des procédés pour insérer automatiquement dans les alvéoles de boitiers isolants ou sur des bornes conductrices, des pièces de connexion qui sont serties sur les extrémités d'un lot de fils conducteurs sortant d'une machine de câblage automatique.

Le document EP-A-0.302.804 et le brevet américain 4,715,099 (YOSHIDA) du 29 décembre 1987 nous décrivent des machines de câblage dans lesquelles on transporte plusieurs fils conducteurs par des pinces qui sont placées sur un convoyeur faisant partie d'une machine de câblage automatique, lesquelles pinces tiennent chacune une extrémité d'un tronçon de fil. Le document EP-A-0.302.804 décrit également la réalisation des convoyeurs et des pinces. Il se rapporte au sertissage de plusieurs fils dans une seule et même cosse réceptrice.

Le brevet français FR-A-2.555.397 décrit un autre type de machine automatique et un dispositif de connexion pour des faisceaux simples représentés en fig 7 à 11.

Ces machines sont commandées par un ordinateur central programmable. Elles découpent automatiquement des tronçons de fils dont la longueur est déterminée par le programme. Elles dénudent certaines extrémités de ceux-ci et elles effectuent automatiquement les opérations de sertissage.

Ces brevets n'enseignent pas comment faire des machines de câblage capables de réaliser des faisceaux complexes comprenant un large éventail de pièces de connexion différentes.

L'insertion automatique de deux pièces mécaniques rigides mâle et femelle l'une dans l'autre est connue dans le domaine de l'assemblage des pièces mécaniques.

Mais dans le cas des machines de câblage, ces opérations sont différentes et deviennent complexes dès lors qu'il n'existe généralement pas deux pièces mécaniques rigides mais un ensemble de fils souples à connecter dans un espace réduit.

La connexion du premier fil est une opération délicate en raison des jeux réduits mais elle se fait dans un contexte parfaitement connu.

Mais, dès que ce premier fil est connectorisé, il devient un obstacle pour la connexion en automatique des suivants et la gêne s'accroit pour la connexion des fils suivants en raison de l'enchevêtrement des fils déjà connectorisés.

Il en résulte de nombreuses collisions des extrémités ce qui occasionne des interruptions de fonctionnement dûes à des extrémités qui butent sur les fils déjà insérés ce qui bloque la machine automatique et réduit sa productivité.

En outre, les extrémités des fils sont généralement munies de pièces de connexion usuellement serties et lors des collisions sur les fils déjà insérés il arrive que ces pièces de connexion soient détériorées:celà diminue le niveau de qualité.

Ceci rend les machines automatiques connues peu fiables et limite leur utilisation à des faisceaux particuliers dans lesquels il n'y a pas de collision: faiceaux parallèles ou très simples utilisant des connecteurs avec une seule couche de contacts comme dans le brevet FR-A-2.555.397.

Ces faisceaux particuliers ne représentent qu'une minorité et les autres faisceaux, dits faisceaux complexes ne sont pas traités en automatique.

La solution à ce problème proposée dans l'art antérieur cité ci-dessus n'est pas efficace dans le cas de faisceaux qui comportent une grande variété de pièces de connexion ce qui est généralement le cas des faisceaux complexes de l'automobile.

Il faut également inventer ou améliorer des procédés ou des dispositifs pour effectuer certaines opérations indispensables comme à titre d'exemple la permutation des fils ou le rangement d'un ensemble d'extrémités dans un ordre donné.

Un objectif de la présente invention est de procurer des moyens permettant la construction de machines de câblage automatiques pour connecter automatiquement des extrémités de tronçons de fils conducteurs ou de fibres optiques à des réceptacles adaptés de composants dont la productivité et le niveau de qualité ne soient pas réduits par des collisions d'extrémités sur des fils déjà connectés.

Un autre objectif de la présente invention est de procurer des moyens permettant la construction de machines de câblage automatiques comme ci-dessus qui permettent de traiter les faisceaux complexes.

Un autre objectif de l'invention est de permettre d'assurer la connexion en automatique d'extrémités munies des pièces de connexion les plus diverses.

Les objectifs de l'invention sont atteints par un procédé selon la revendication 1.

Avantageusement, certaines desdites pinces permettent de saisir et de maintenir plusieurs fils dans un ordre donné et dans un espace réduit.

Avantageusement, lesdites pinces sont séparables dudit convoyeur et peuvent être engagées mécaniquement sur celui-ci ou retirées mécaniquement de celui-ci.

D'autres objectifs spécifiques à la réalisation de l'unité de permutation qui est un sous ensemble de cette invention complexe sont atteints par un procédé suivant lequel on transfère temporairement certains fils dans une position d'attente pour les reprendre ensuite et les ranger ainsi dans un ordre prédéterminé.

Avantageusement, pour la réalisation de faisceaux de câblage et pour permettre d'interconnecter automatiquement plusieurs bornes de divers composants électriques et plusieurs alvéoles de divers boitiers connecteurs avec des tronçons de fils conducteurs ou de fibres optiques, on dispose latéralement le long dudit chemin de transfert plusieurs unités de connexion.

Un résultat de la présente invention est la construction de machines de câblage, notamment une machine de câblage automatique, permettant de réaliser la connexion automatique des extrémités de tronçons de fils conducteurs ou de fibres optiques avec des bornes d'un composant électrique ou avec des alvéoles d'un boitier connecteur, qui sont dans le désordre et de permettre de traiter ainsi la majorité des faisceaux; de telles machines sont capables de connecter automatiquement des extrémités de tronçons de fils conducteurs ou de fibres optiques avec des bornes d'un composant électrique ou avec des alvéoles d'un boitier connecteur pour confectionner des faisceaux comportant aussi bien des connecteurs que des composants.

Ce premier résultat permet de réaliser automatiquement des faisceaux ou des interconnexions et d'éviter la plupart des interruptions de fonctionnement dûes à des extrémités qui butent sur les fils déjà insérés.

Ce premier résultat permet également de réaliser automatiquement des faisceaux ou des interconnexions en évitant la dégradation de qualité causée par la détérioration des pièces de connexion lors de la connexion automatique consécutive aux collisions desdites pièces de connexion sur les fils déjà insérés.

Un autre résultat de l'invention est de permettre d'assurer la connexion en automatique d'extrémités munies des pièces de connexion les plus diverses.

On dispose deux organes de préhension sur l'unité de permutation on dispose ainsi d'un moyen de stockage temporaire et on déplace ainsi deux extémités dans un seul mouvement d'aller retour, ce qui prend moins de temps que les deux déplacements réalisés consécutivement.

Ces inventions permettent également:
- de réaliser des faisceaux qui nécessitent de connecter simultanément plus de composants que ne peut en porter une pince-composant;
- de mieux organiser les groupes de fils connectés sur les composants d'une même pince-composant et d'éviter tout noeud ou croisement intempestif entre des fils de branches différentes en regroupant tous les composants d'une même branche de faisceau sur une ou plusieurs pinces-composant.
- de limiter le nombre de boitiers qui doivent être présentés simultanément sur une seule ou sur plusieurs unités de connexion, puisqu'il devient ainsi possible de connecter successivement des boitiers différents; on réduit ainsi le nombre d'unités de connexions nécessaires et le nombre de composants sur une même pince-composant:le coût de la machine de câblage en est réduit et sa flexibilité en est augmentée.
- de fabriquer des faisceaux plus complexes et d'automatiser de nombreuses tâches manuelles en améliorant la productivité et la qualité.

La description suivante se réfère aux dessins annexés qui représentent, sans aucun caractère limitatif, un exemple de réalisation d'un dispositif selon l'invention et de pinces de divers types destinées à équiper celui-ci.

La figure 1 représente une vue partielle en perspective d'un dispositif selon l'invention, dont les figures 1A et 1B sont des extraits plus nets.

Les figures 2 et 3 sont une coupe transversale et une vue en élévation d'une pince de chargement.

Les figures 4, 5 et 6 sont respectivement, une vue en coupe tranversale d'une pince d'extrémité, une vue en élévation de cette pince et du dispositif d'ouverture associé et une vue de dessous du socle de ladite pince.

La figure 7 représente un ordre d'insertion préférentiel.

La figure 8 représente un faisceau dont on détermine le processus de fabrication à titre d'exemple.

Les figures 9 et 10 sont une vue de dessus et une vue en élévation d'un dispositif selon l'invention en train de fabriquer un faisceau.

La figure 11 est une vue en perspective d'un mode de réalisation d'un système de chargement.

La figure 12 est une vue du système de vérou associé à une découpe dans le convoyeur.

Les figures 13 et 14 sont une vue en élévation et une vue de dessus d'une pince de groupe.

Les figures 15 et figure 16 représentent une vue de face et une coupe transversale d'un mode de réalisation d'une pince-composant selon l'invention.

La figure 17 représente en perspective un mode de réalisation du manipulateur de connexion selon une perspective.

Les figures 18 et 19 représentent l'unité de permutation en vue perspective partielle.

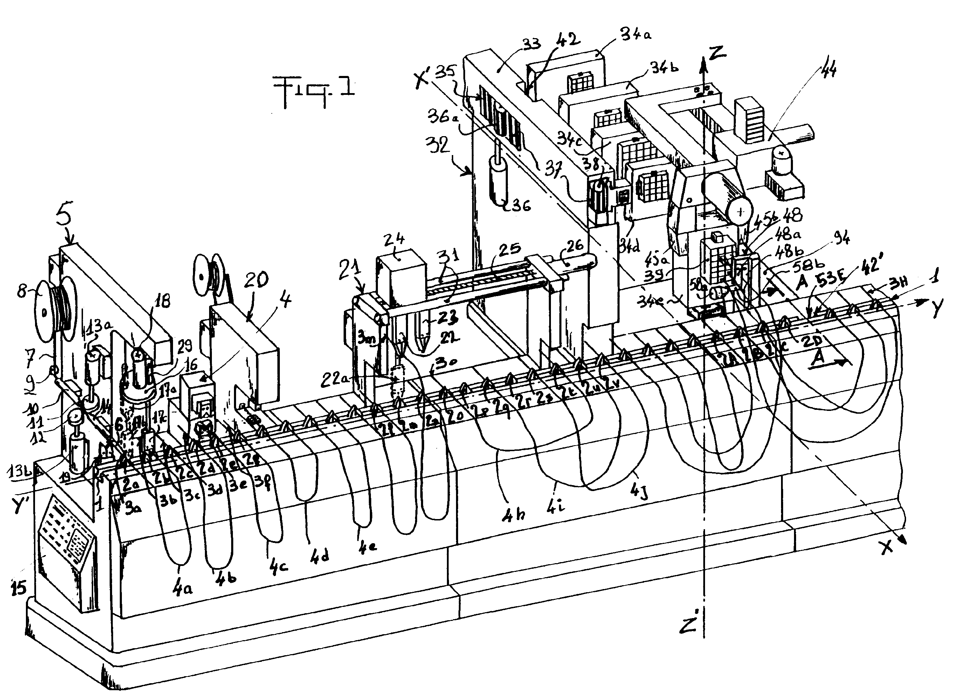

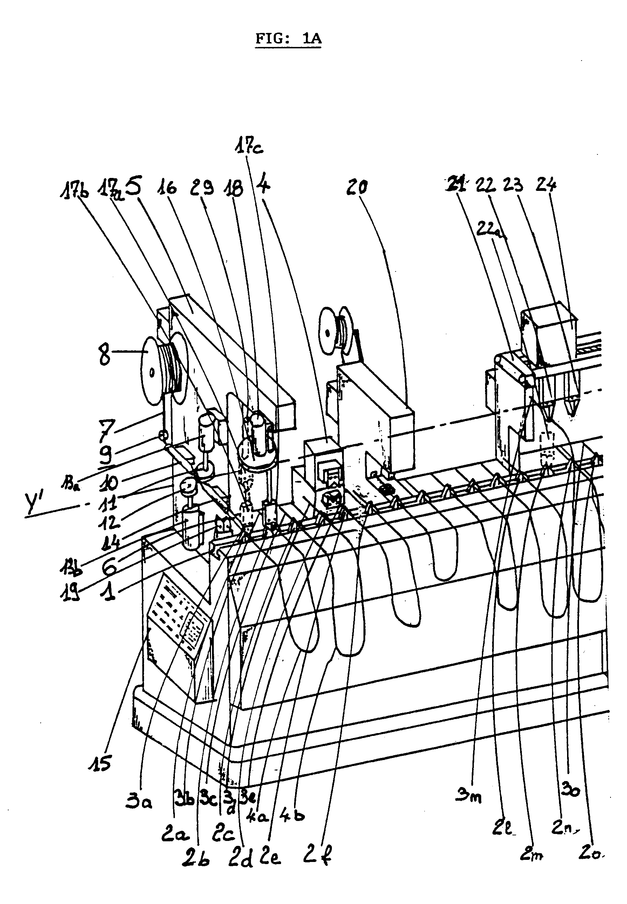

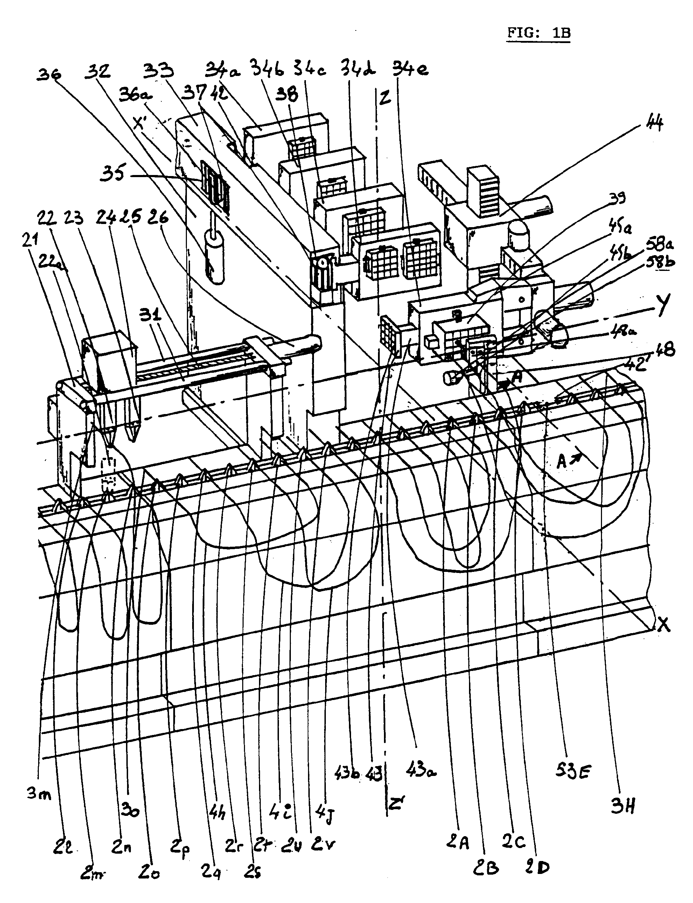

La figure 1 montre que le convoyeur (1) est muni de pinces (2a), (2b),(2c),(2d)... pour saisir et maintenir les extrémités comme (3a), (3b),(3c) de tronçons de fil comme (4a) et (4b), et un fil est aussi bien un conducteur électrique qu'une fibre optique.

Ces pinces permettant de transporter lesdites extrémités selon un certain chemin de transfert, sont avantageusement disposées sur le convoyeur selon des intervalles réguliers.

L'ordinateur a mis en place au moyen du dispositif de chargement diverses pinces (2a) et (2b) sur le convoyeur (1) comme représenté sur la figure 1.

La figure 1 montre que certains emplacements de pince comme (53E) restent vacants et que certaines pinces comme (2p) ne maintiennent pas d'extrémité de fil. Certaines pinces vides sont avantageusement destinées à être utilisées pour saisir des extrémités transférées par l'unité de permutation (21) depuis d'autres pinces et certains emplacements de pinces vacants sont avantageusement réservés pour la mise en place de pinces particulières d'autre type que celui pour saisir et maintenir des extrémités de fil comme des "pinces-composant".

On transfère par intermittence ce convoyeur selon des pas égaux qui représentent généralement l'intervalle entre deux pinces et dans ce cas l'extrémité (3e) présentée par la pince (2e) à l'unité de traitement d'extrémité (4) est remplacée par l'extrémité suivante (3d): ainsi l'unité de dénudage (4) peut dénuder deux extrémités consécutives; le convoyeur translate ainsi toutes les pinces qu'il porte vers l'aval.

Le transfert est réalisé par intermittence pour permettre aux diverses unités d'effectuer sous le contrôle de l'ordinateur (15) des actions prédéterminées et spécifiques aux extrémités que leur présente le convoyeur (1) également sous le contrôle de l'ordinateur, comme la mise en place des extrémités de tronçons de fil de longueurs prédéterminées dans les pinces pour l'unité de chargement (5), comme la modification des extrémités pour l'unité de dénudage (4) ou l'unité de sertissage (20), comme la modification de l'ordre de certaines des dites extrémités sur ledit convoyeur par l'unité de permutation (21) et comme la connexion à certains des réceptacles de composants d'une façon prédéterminée pour une unité de connexion telle que (32).

La figure 1A montre un exemple de réalisation de l'unité (5) ou unité de chargement qui met en place des tronçons de fil dans les pinces. Le fil (7) de la bobine (8) circule sur la poulie de renvoi (9), dans un premier tube (10) entre deux roues de friction (11) et (12) qui le prennent "en sandwich" et enfin dans un second tube télescopique (14) dont la partie (6) représente la partie rétractable.

Au début de la mise en place du tronçon de fil (4a), le transfert est dans la position représentée mais la pince (2a), qui est dans l'axe du tube (14) dont le tube coaxial et rétractable (6) est rentré, et la pince (2b) sont vides.

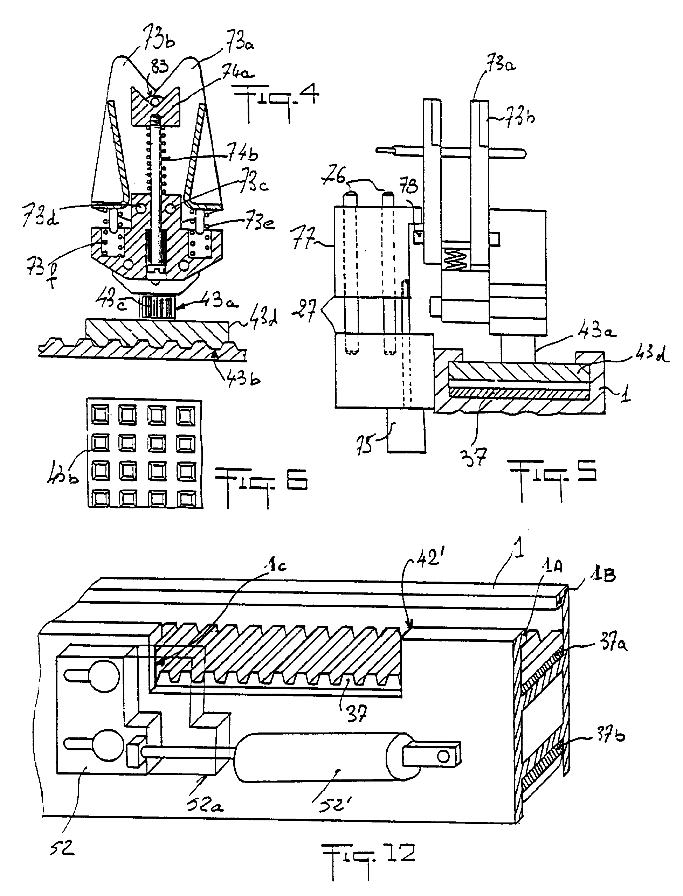

A l'aide de moyens d'ouverture actionnés par un vérin (75) représenté figure 5 et non visible sur la figure 1, l'ordinateur programmable (15) ouvre ces pinces et sort le tube rétractable (6) qui se glisse entre les becs ouverts de la pince (2a).

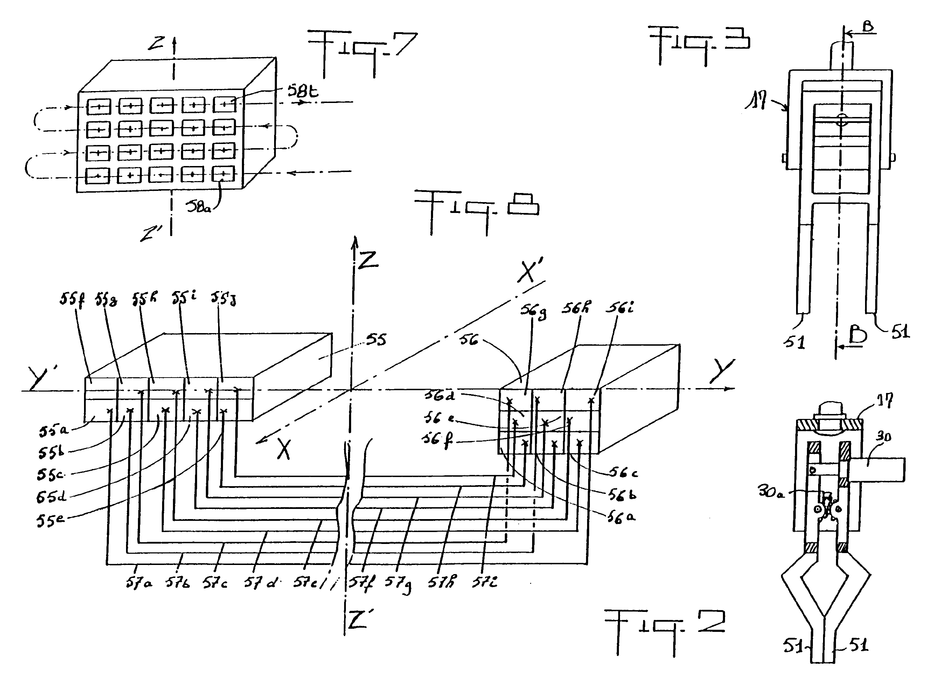

L'ordinateur met en route les moteurs (13a) et (13b) dont les mouvements sont synchronisés et qui entrainent les roues de friction (11) et (12), et déroule ainsi une certaine longueur de fil qui dépasse du tube (6) puis il commande le manipulateur (16) dont la pince de chargement (17) est ouverte au moyen du vérin (30), figure 2, et descend de la position de repos (17a) vers une première position intermédiaire (17b), au moyen du vérin (29), saisit l'extrémité du fil qui dépasse, remonte en position (17a) puis est déplacé par une rotation de 180° autour de l'axe du moteur (18) et une translation verticale qui l'amène dans la seconde position intermédiaire (17c) et durant tous ces déplacements il commande le moteur de déroulement de fil (13a) et (13b) afin de fournir le fil nécessaire pour permettre ces mouvements et pour dérouler la longueur prédéterminée du tronçon.

La pince de chargement (17) maintient, entre ses doigts (51), la première extrémité, dite extrémité aval, en position (17c) et entre les becs (73) ouverts de la pince d'extrémité (2b). Cette extrémité est saisie par ladite pince (2b) dont les becs (73a) et (73b) sont refermés par l'ordinateur qui commande ensuite le manipulateur (16) pour ouvrir la pince de chargement et pour la ramener en position (17a).

L'ordinateur commande ensuite la rentrée du tube (6) dans le tube (14), la fermeture de la pince (2a) qui saisit la deuxième extrémité, puis il commande la pince coupante (19) qui coupe le fil (7) à l'extrémité rétractée du tube (6) créant ainsi la deuxième extrémité (3a), dite extrémité amont, du tronçon et met fin à la mise en place du tronçon de fil (4a) dont les extrémités sont maintenues par les pinces (2a) et (2b) dont est muni le convoyeur (1).

Les extrémités sont transférées le long d'un chemin de transfert qui est rectiligne dans cet exemple non limitatif (un convoyeur circulaire engendrerait un chemin circulaire) pour être présentées à diverses unités de traitement des extrémités qui sont situées le long de ce chemin de transfert.

La figure 1 montre que lesdites extrémités sont ainsi présentées à diverses unités de traitement d'extrémités (4) et (20) disposées latéralement le long dudit chemin de transfert de façon à ne pas gêner le transfert des extrémités même si certaines parties de ces unités peuvent venir surplomber le transfert comme par exemple les organes de préhension de l'unité de permutation (21).

L'ordinateur modifie d'une façon prédéterminée lesdites extrémités au moyen desdites unités de traitement des extrémités en dénudant certaines extrémités avec l'unité de dénudage (4), en sertissant sur certaines extrémités des pièces de connexion avec l'unité de sertissage (20) comme représenté sur la figure 1, à titre d'exemple non limitatif.

Dans le cas particulier où le fil est une fibre optique les unités de traitement modifient les extrémités en les polissant, en les dénudant, en y posant des embouts.

L'ordinateur transfère et présente ensuite lesdites extrémités à une unité de permutation (21) qui est disposée latéralement le long dudit chemin de transfert comme représenté sur la figure 1.

Selon l'exemple de réalisation avantageux de la figure 1, les extrémités sont maintenues horizontalement et toutes les unités sont situées transversalement du même côté du chemin de transfert tandis que les tronçons de fils sont situés de l'autre coté, mais cette disposition n'est nullement limitative et selon un autre exemple de réalisation tout aussi avantageux, les extrémités seraient maintenues verticalement et les tronçons seraient pendus vers le bas dans l'alignement, cette solution alternative est avantageuse pour le maintien du fil et limite les problèmes causés par les déchets créés dans le traitement des extrémités quine tombent pas dans les unités situées alors au dessus.

Selon l'exemple de réalisation avantageux de la figure 1, qui est décrit ci-dessus, les tronçons de fils sont découpés et mis en place dans les pinces du convoyeur par l'unité de chargement (5), ensuite les extrémités sont modifiées par d'autres unités comme l'unité de dénudage (4), l'unité de sertissage (20) ou toute autre unité disposée de même en amont de l'unité de permutation (21), le convoyeur (1) transfère ainsi à l'unité de permutation des extrémités modifiées.

Selon un autre mode de réalisation de l'invention les tronçons de fil sont découpés et les extrémités sont modifiées sans la mise en oeuvre du convoyeur (1) et des unités représentées sur la figure 1, par exemple manuellement, et les extrémités peuvent alors être présentées manuellement ou à l'aide d'un manipulateur du commerce muni par exemple d'au moins une pince de chargement (17).

Comme le montre la figure 1, l'unité de permutation modifie l'ordre des extrémités sur le convoyeur. L'ordre des extrémités en amont de l'unité de permutation est tel que les tronçons de fils sont maintenus l'un après l'autre; aucune extrémité d'un tronçon n'est imbriquée entre les extrémités d'un autre tronçon comme il est représenté sur la figure 1: tronçons (2a),(2b),(2c),(2d),(2e) et (2f).

Comme le montre la figure 1, dans la zône de présentation des extrémités à l'unité de permutation: pinces (2m),(2n),(2o),(2p),(2q), (2r) et (2s) l'ordre des extrémités a été modifié. Les extrémités aval des trois tronçons: (4h), (4i) et (4j) ont été groupées dans trois pinces consécutives: (2t),(2u) et (2v). Les extrémités sont réordonnées.

La figure 1 montre un exemple de réalisation de cette unité de permutation (21): un premier manipulateur est muni d'au moins un moyen de préhension, (22) et (23), et de moyens permettant de le déplacer d'un point à un autre dudit convoyeur.

Une première partie de ces moyens de déplacement est du même type que celui de la pince de chargement (17): deux vérins du même type que (29) et qui permettent de descendre les moyens de préhension (22) et (23), du même type que ceux de la pince de chargement (17) au niveau des pinces (2m) et (2n) auquelles sont associées des moyens d'ouverture individuels, dispositif du type (27) figure 5, non visibles sur la figure 1. Les vérins du type (29) seront avantageusement du type électrique pour permettre de descendre à divers niveaux et de ranger ainsi plusieurs extrémités à des niveaux différents dans une pince de groupe comme représenté sur la figure (13).

La deuxième partie de ces moyens est du type vis-écrou, le moteur (26) entraine en rotation la vis sans fin (25) et l'écrou monté sur l'ensemble mobile (24) entraine en translation cet ensemble (24), guidé par les glissières (31), le long du convoyeur de telle sorte que les organes de préhension se déplacent à la verticale du chemin de transfert.

De sorte que ce premier manipulateur (21) peut saisir avec chacun desdits moyens de préhension (22),(23) une extrémité maintenue par une des pinces dudit convoyeur, dans la zone d'action soit l'une des pinces (2m) à (2s) puis ouvrir ladite pince et dégager ladite extrémité de ladite pince qui devient vide puis se déplacer et engager cette extrémité dans une autre pince vide dudit convoyeur.

Ainsi selon la figure 1, sous la commande de l'ordinateur (15), ce premier manipulateur (21) peut prélever l'extrémité (3m) au moyen de l'organe de préhension (22). Pour cela l'ordinateur ouvre et descend l'organe de préhension (22) en position basse à la position (22a), le ferme en actionnant le vérin (30) figure 2 pour saisir l'extrémité (3m) maintenue par la pince (2m) du convoyeur, puis ouvre ladite pince (2m) et en remontant l'organe de préhension fermé en position haute (22) dégage ladite extrémité de ladite pince qui devient vide.

Cet état de l'action est celui représenté sur la figure 1.

Ensuite, selon cet exemple, l'ordinateur déplace l'ensemble mobile (24) qui porte le moyen de préhension (22),(23) au moyen de la vis sans fin (25), en actionnant le moteur (26) pour amener l'organe (22) à la verticale de la pince vide (2p). Il engage alors l'extrémité (3m) dans cette pince vide dudit convoyeur en ouvrant la pince (2p) au moyen du dispositif d'ouverture qui lui est associé, en descendant l'organe de préhension en position basse, en fermant les becs de la pince (2p) sur l'extrémité qui est alors saisie et maintenue par cette pince (2p), en ouvrant l'organe de préhension et le dégageant en position haute.

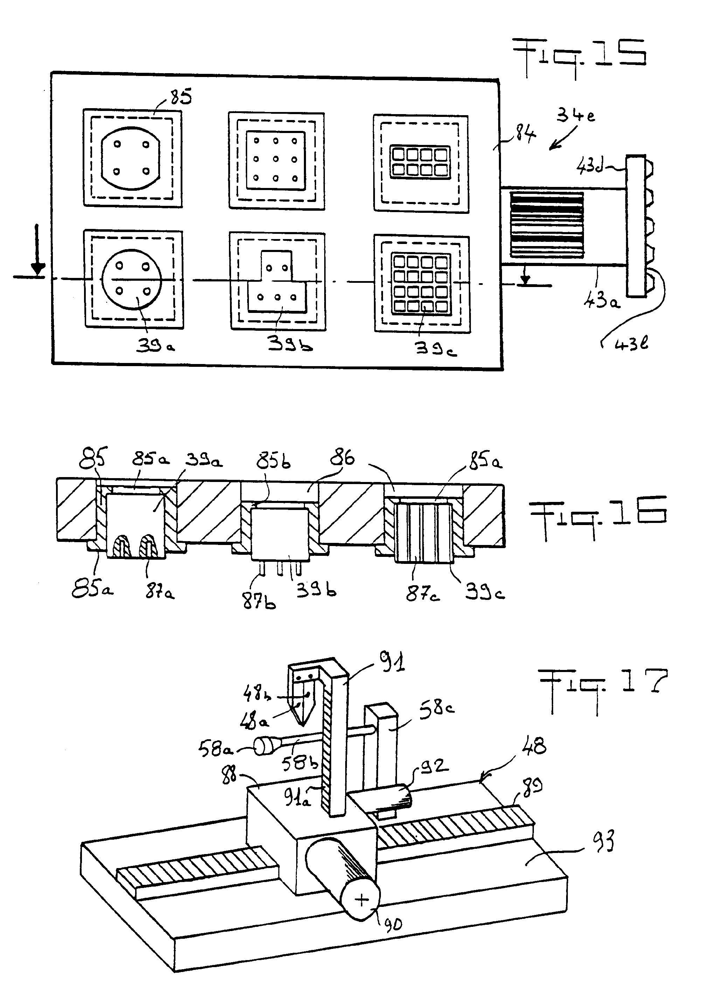

Si la pince (2p) est une pince de groupe il n'y pas lieu de commander l'ouverture car les fils sont maintenus par déformation, mais il faut commander la descente à un niveau prédéterminé car les fils sont rangés à des niveaux différents comme le montrent les figures 13, 14.

Le transfert de cette extrémité étant réalisé, l'ordinateur peut commander de la même manière le transfert d'une autre extrémité.

Il est avantageux de disposer de deux organes de préhension comme représenté en figure 1, cela permet de déplacer deux extrémités dans un seul mouvement d'aller retour, ce qui prend moins de temps que les deux déplacements réalisés consécutivement.

Un autre avantage est que l'un des organes peut servir de moyen de stockage temporaire d'une extrémité, ainsi si l'extrémité (3m) maintenue par la pince (2m) doit être permutée avec l'extrémité (3o) maintenue par la pince (2o), l'ordinateur peut commander à l'organe de préhension (22) de prélever l'extémité (3m), commander à l'organe de préhension (23) de prélever l'extrémité (3o), commander à l'organe de préhension (22) de déposer l'extrémité (3m) dans la pince (2o) et enfin de la déposer dans la pince (2m).

L'utilisation de plusieurs moyens de préhension (22),(23) est avantageuse car les mouvements sont réduits ce qui accélère l'action de l'unité de permutation.

La figure 1 montre une machine de câblage dans laquelle l'ordinateur transfère et présente au moyen desdites pinces plusieurs desdites extrémités réordonnées à au moins une unité de connexion (32) disposée latéralement le long du dit chemin de transfert en aval de ladite unité de permutation (21) et qui comprend des moyens pour prélever une dite extrémité et la connecter sur l'un desdits réceptacles adaptés du ou des composants qu'elle traite, et sous le contrôle de l'ordinateur (15) au moyen de ladite unité de connexion, on prélève certaines desdites extrémités dans lesdites pinces sur ledit convoyeur et on les connecte à certains desdits réceptacles d'une façon prédéterminée, en les prélevant dans un ordre qui peut être différent de l'ordre dans lequel lesdites extrémitées sont amenées à ladite unité de connexion. La figure 1 montre un exemple de réalisation non limitatif selon lequel au moins un deuxième manipulateur (32) dit manipulateur de connexion est disposé latéralement le long du chemin de transfert en aval du premier manipulateur (21).

La figure 1 montre une variante avantageuse du procédé selon laquelle il est disposé plusieurs desdits deuxièmes manipulateurs le long du transfert dont seul le premier a été représenté sur la vue partielle de la figure figure 1. Dans la partie non représentée, le transfert (1) se continue et un second dit deuxième manipulateur est disposé comme le premier. Ce second deuxième manipulateur connecte des extrémités non connectées par le premier comme (3H).

Avantageusement on dispose latéralement le long du dit chemin de transfert plusieurs unités de connexion pour réaliser des faisceaux de câblage et pour interconnecter automatiquement plusieurs bornes de divers composants électriques et plusieurs alvéoles de divers boitiers connecteurs avec des tronçons de fils conducteurs ou de fibres optiques. Cette configuration permet de réaliser des faisceaux qui nécessitent de connecter simultanément plus de composants que ne peut en porter une pince-composant. Un autre avantage de cette solution est que la mise en place de plusieurs unités de connexion permet de mieux organiser les groupes de fils connectés sur les composants d'une même pince-composant et de tendre vers la solution qui consiste à utiliser une pince-composant par branche de faisceau. Cette organisation évite tout noeud ou croisement intempestif entre des fils de branches différentes.

Avantageusement la fabrication de faisceau peut être organisée en regroupant tous les composants d'une même branche de faisceau sur une ou plusieurs pinces-composant.

Selon une réalisation particulière, ce dispositif selon l'invention comporte un dispositif global de commande qui commande le fonctionnement desdites unités de connexion de telle manière qu'une extrémité correspondant à l'une particulière desdites unités de connexion est présentée par ledit convoyeur à ladite unité de connexion particulière en réponse à un premier signal émis par ledit dispositif global de contrôle et ladite unité de connexion particulière prélève ladite extrémité et la connecte à un réceptacle particulier en réponse à un second signal émis par ledit dispositif global de commande, et de sorte que les extrémités quine correspondent pas à ladite unité de connexion particulière sautent ladite unité de connexion particulière. Selon un premier mode de réalisation avantageux ce dispositif global de commande est incorporé sous forme de logiciel dans l'ordinateur (15) qui délivre lesdits signaux et selon un deuxième mode de réalisation on associe en outre au mode de réalisation précédent un réseau de transmission de l'information et un automate sur chacune des unités de connexion, par exemple un automate programmable d'un type connu, de sorte que ces automates reçoivent ces informations sous une forme codée appropriée et génèrent à partir de celles-ci tout ou partie desdits signaux selon un programme adapté.

Selon la figure 1, un deuxième convoyeur (33), du type connu à courroie crantée comme le convoyeur (1), convoie un ensemble de pinces du type pour saisir et maintenir un composant (34a), (34b), (34c), (34d) qui sont appelées pinces-composant.

Les figures 1, 15 et 16 montrent des exemples de réalisation des pinces-composant, la pince-composant (34e) comprend un socle (43d) dont la face (43b) est munie de dents formant deux crémaillères selon des axes parallèles à X′X et à Z′Z, la figure 6 montre un exemple de réalisation des dents de ce socle. Ces dents peuvent engrenner aussi bien avec les dents de la courroie crantée (37) du deuxième convoyeur (33) qu'avec celles de la courroie crantée de même type dont est muni le premier convoyeur (1).

Dans l'exemple de la figure 1, l'axe Z′Z est vertical, l'axe Y′Y est horizontal et parallèle au premier convoyeur (1), et X′X est également horizontal. Ces trois axes sont perpendiculaires deux à deux.

Un opérateur engage manuellement et l'une après l'autre, diverses pinces-composant à l'extrémité amont du convoyeur (33). Pour cela il glisse le socle (43d) dans la découpe (42) en engageant, selon un mouvement vertical, le sommet des dents (43) du socle dans la forme complémentaire de la courroie crantée (37) formée par le creux entre deux dents, le détail des formes complémentaires identiques du socle et de la courroie est représenté sur la figure 4 . Après qu'une pince (34) ait été mise en place, le convoyeur transfère la pince (34a) en (34b) ce qui permet à l'opérateur de glisser en place une deuxième pince-composant au travers de la découpe (42). Cette opération peut être avantageusement automatisée au moyen d'un chargeur amovible de pinces-composant et d'un mécanisme commandé par l'ordinateur et qui les met en place une à une. Ainsi l'opérateur n'intervient que pour changer ce chargeur dans lequel plusieurs pinces-composant sont empilées.

Le moteur (36) entraine le pignon denté (36a) qui est solidaire de son axe et qui engrène sur la courroie crantée (37) selon l'axe X′X. Ce pignon et la courroie apparaissent sur la figure 1 au travers de la lumière (35) ouverte dans le convoyeur (33). Cette courroie est tendue et s'enroule à ses deux extrémités sur deux roues telles que la' roue (38). L'ordinateur (15) commande ce moteur de façon à déplacer la courroie crantée et les pinces qu'elle entraine jusqu'à ce qu'une pince soit transférée à l'extrémité avant de ce deuxième convoyeur au niveau représenté par la pince-composant (34d).

Selon la réalisation de la figure 1, l'extrémité avant du convoyeur est ouverte de sorte que la pince située à l'avant puisse sortir.

La figure 1 représente un exemple de réalisation du troisième manipulateur (44) qui est un manipulateur d'un type connu à trois degrés de liberté en translation selon les trois axes X′X, Y′Y et Z′Z qui peut être du type à pignons-crémaillère comme représenté schématiquement, et un degré de liberté en rotation autour d'un axe parallèle à X′X.

L'ordinateur commande ce troisième manipulateur de façon à saisir dans les mâchoires (45a), (45b) qui sont vides la pince-composant transférée à l'extrémité avant du deuxième convoyeur (33) au niveau représenté par la pince-composant (34d) puis il commande le déplacement de ce troisième manipulateur selon l'axe X′X en synchronisme avec le convogeur (33) le temps de dégager le socle (43) des dents de la courroie (37). La commande du troisième manipulateur est alors seule maintenue pour amener cette pince-composant dans la position (34e) de la figure 1 en effectuant deux translations selon YY′ et X′X et une rotation en faisant tourner la pince-composant de 90° autour d'un axe parallèle à X′X de sorte à amener son socle (43d) à l'horizontale face (43) vers le bas .

La figure 1 montre un exemple de réalisation du manipulateur (48) qui peut être alternativement, un manipulateur du commerce: les mâchoires (48a) et (48b) sont portées par ce manipulateur (48) qui permet, sous le contrôle de l'ordinateur de prélever une extrémité dans une des pinces (2A), (2B), (2C), (2D) ou (2E) et de la présenter dans une position fixe en vis à vis de la pince-composant de telle sorte que l'axe de cette extrémité soit parallèle à l'axe X′X.

Les pinces-composant représentées sur les figures 1, 15 et 16 ont pour fonction de saisir et maintenir au moins un composant de telle manière que les axes des réceptacles adaptés des composants soient dirigés selon l'axe X′X.

L'ordinateur déplace selon les axes Y′Y et Z′Z le composant (39) maintenu par la pince-composant (34e) pour aligner le réceptacle correspondant avec l'extrémité maintenue par le troisième manipulateur (48) et insère alors cette extrémité par un mouvement selon l'axé X′X de sorte à insérer et à connecter l'extrémité avec le réceptacle adapté amené en vis à vis.

Ce dit réceptacle est un réceptacle prédéterminé en fonction de l'extrémité et c'est l'un des réceptacles adaptés du ou des composants disposés dans le champ d'action dudit manipulateur de connexion, c'est à dire, de l'un des composants maintenus par la pince (34e) maintenue elle-même par les mâchoires (45a) et (45b).

L'ordinateur émet alors les commandes telles que les mâchoires (48a) et (48b) relâchent l'extrémité qui vient d'être connectée et que le troisième manipulateur recule de façon à pouvoir recommencer un nouveau cycle de connexion d'extrémité aprés avoir avantageusement replié le fil enfiché vers le bas comme il sera exposé plus loin.

Lorsque la dernière extrémité à connecter sur le ou les composants portés par la pince-composant (34e) maintenue par les mâchoires (45a) et (45b) est connectée, l'ordinateur commande au troisième manipulateur 44 la mise en place de la pince-composant sur le convoyeur (1) en glissant le socle (43d), dans un mouvement selon X′X, sur le convoyeur à courroie crantée (1) de la même façon qu'elle avait été glissée sur le convoyeur à courroie crantée (33). La mise en place de cette pince-composant est effectuée au travers de la découpe (42′) dans l'emplacement (53E) laissé libre sur le convoyeur (1) par l'ordinateur. A cette fin l'ordinateur n'a pas chargé de pince à cet emplacement.

La figure 12 représente en détail partiel vu de l'arrière et selon une coupe AA le dégagement (42′) réalisé sur le convoyeur (1) au niveau de la pince (2D) de la figure 1 pour la mise en place de la pince-composant sur le convoyeur. Ce dégagement est identique à celui (42) réalisé dans le convoyeur (33).

Selon l'exemple de cette figure 12, la courroie (37) a la même largeur que le coté du socle (43d) dont la base (43) est avantageusement carrée. Le socle (43d) a une épaisseur telle qu'il soit emprisonné entre la courroie (37) et les parties (1a) et (1b) du convoyeur.

La découpe est située le long du chemin de circulation dans lequel sont emprisonnés les socles qui sont entrainés par le brin actif de la courroie (37a) dont le brin mou circule dans la partie inférieure du convoyeur.

Un verrou (52) est mobile en translation. Il est actionné par le vérin (52′) fixé d'un coté sur le verrou et de l'autre sur le convoyeur et vient dans la position (52a) occulter partiellement la lumière (42) et empêcher les socles de sortir. Les arêtes verticales intérieures de la découpe (1c) sont chanfreinées pour éviter des coincements.

Dans cet exemple de réalisation non limitatif de l'invention, le convoyeur (1) transporte avantageusement des pinces de types différents et avantageusement dans un procédé selon l'invention lesdites pinces transportées par ledit convoyeur sont de divers types.

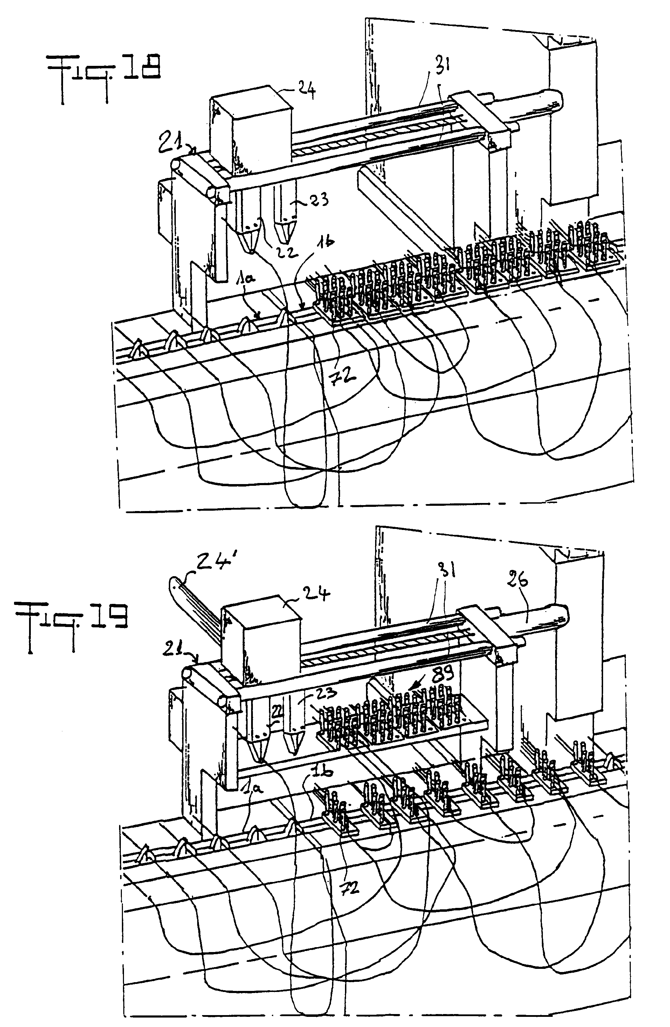

Le manipulateur (48) réprésenté sur les figures 1 et 17 comprend un dispositif complémentaire pour empêcher que les fils déjà connectés gênent les extrémités qui continuent à circuler sur le convoyeur. Ce dispositif comprend une tige (58b) terminée par une butée cylindrique (58a). Selon l'exemple de réalisation de la figure 1, les fils déjà connectés sont maintenus par la tige (58b) bien au dessus des extrémités qui circulent dessous de manière à ne pas les gêner. La butée (58a) empèche les fils de glisser lorsque le manipulateur (48) est déplacé selon l'axe Y′Y et la longueur de la tige (48b) est au moins égale à l'amplitude de ce déplacement. Lorsque la dernière extrémité a été insérée dans les composants portés par la pince-composant (34e), le manipulateur (44) est déplacé de façon à ce que les fils connectés passent par dessus le manipulateur (48).

Selon un mode de réalisation avantageux l'ordinateur (15) commande l'unité de permutation de façon à disposer les extrémités dans un ordre avantageux ce qui permet de simplifier le manipulateur (48) en supprimant le déplacement selon l'axe Y′Y et en ne conservant qu'un déplacement fixe selon l'axe Z′Z qui est alors avantageusement réalisé par un verin. Le manipulateur (48) est alors du même type que le manipulateur (16) ou (21).

La figure 17 représente un mode de réalisation du manipulateur (48) selon une perspective. Le chariot (88) se déplace linéairement le long de la crémaillère (89) sous l'action du moteur (90). Ce chariot porte une potence (91) munie d'un crémaillère (91a) qui se déplace verticalement sous l'action du moteur (92); la table (93) comporte une découpe pour laisser toute liberté de déplacement à l'ensemble potence-crémaillère (91).

La pince qui saisit dans ses becs (48a) et (48b) les extrémités de fils est du même type que la pince représentée sur les figures 2 et 3.

La tige (58b), terminée par la butée (58a) est fixée par la potence (58c) sur la table (93) qui vient se mettre en place sur le chassis de l'unité de connexion (32); cette tige est maintenue fixe à un niveau supérieur à celui des pinces qui circulent sur le convoyeur (1b) de sorte à éviter toute interférence.

Un ordre préférentiel de connexion est un ordre de connexion tel que lorsque l'on connecte les extrémités selon un tel ordre, les tronçons de fil qui correspondent aux extrémités déja enfichées et qui pendent, ne masquent pas les alvéoles restant à connecter.

Dans un dispositif selon l'invention qui connecte les extrémités dans un ordre préférentiel il est avantageux d'accentuer la courbe vers le bas que prennent naturellement les fils sous l'effet de leur poids pour bien dégager les alvéoles et un procédé selon l'invention comprend des moyens pour plier les fils connectés du coté opposé à celui des alvéoles restant à connecter. Par exemple, lorsqu'une extrémité est enfichée, un manipulateur glisse selon un mouvement vers le bas, entre la face avant du boiter (39) et le manipulateur (48), une brosse ou une pièce recouverte d'un élément plastique afin de ne pas blesser les fils et s'éloigne avant de remonter.

La figure 1 décrit un autre mode de réalisation avantageux pour accentuer la courbe, le boitier (39) étant approché des becs (48a), (48b) recouverts d'un élément plastique, et éventuellement compléter cette action par un déplacement vers le bas de ces becs qui plient ainsi les fils du coté opposé à celui des alvéoles restant à connecter soit vers le bas, et dégagent les alvéoles restant à connecter et évitent toute interférence mécanique.

La figure 7 montre un exemple d'ordre préférentiel en sachant que l'axe Z′Z est vertical et dirigé vers le haut. Il convient de connecter les extrémités selon l'ordre défini par le circuit B′B. La première extrémité à connecter est donc (58a) et la dernière (58t).

L'ordre préférentiel défini n'est pas unique, plus généralement les divers niveaux doivent être remplis l'un après l'autre et en effectuant, de préférence, les connections selon une seule direction c'est à dire suivant un ordre tel qu'il n'y ait pas lieu de connecter une extrémité entre deux extrémités déjà insérées au même niveau.

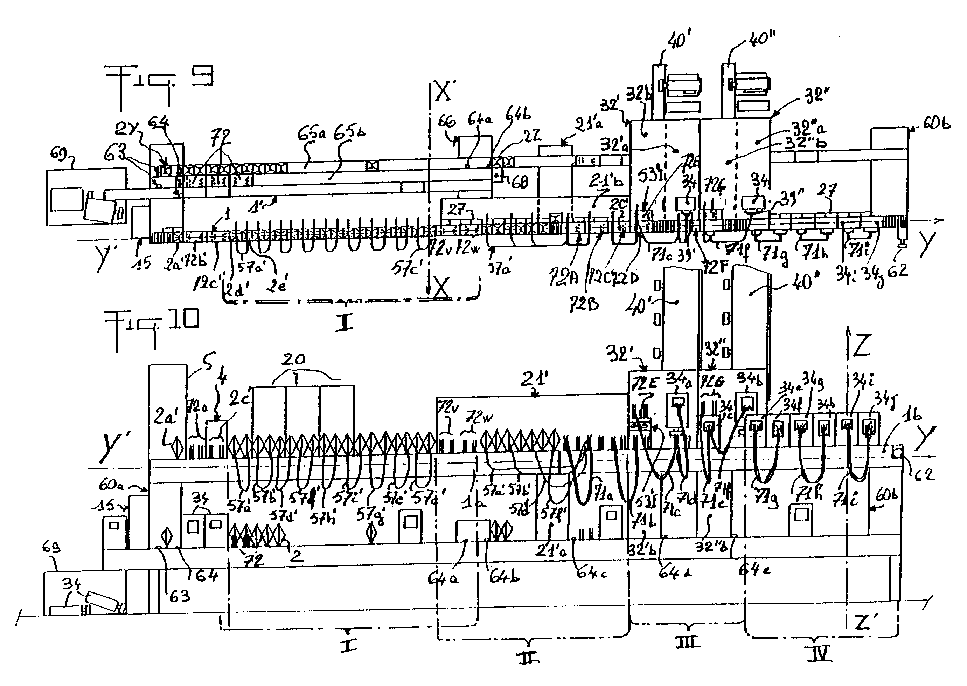

A titre d'exemple, le faisceau décrit à la figure 8 comporte neuf tronçons de fils qui relient chacun un alvéole du boitier (55) à un alvéole du boitier (56) et à titre d'exemple selon une solution d'interconnexion:
- les extrémités du tronçon (57a): aval connecté à l'alvéole (55a) et amont connecté à l'alvéole (56i),
- les extrémités du tronçon (57b): aval connecté à l'alvéole (55b) et amont connecté à l'alvéole (56h),
- les extrémités du tronçon (57c): aval connecté à l'alvéole (55g) et amont connecté à l'alvéole (56g),
- les extrémités du tronçon (57d): aval connecté à l'alvéole (55c) et amont connecté à l'alvéole (56c),
- les extrémités du tronçon (57e): aval connecté à l'alvéole (55h) et amont connecté à l'alvéole (56f),
- les extrémités du tronçon (57f): aval connecté à l'alvéole (55d) et amont connecté à l'alvéole (56b).
- les extrémités du tronçon (57g): aval connecté à l'alvéole (55i) et amont connecté à l'alvéole (56e),
- les extrémités du tronçon (57h): aval connecté à l'alvéole (55e) et amont connecté à l'alvéole (56a),
- les extrémités du tronçon (57i): aval connecté à l'alvéole (55j) et amont connecté à l'alvéole (56d).

Pour connecter dans un ordre préférentiel le boitier (55), il faut, à titre d'exemple, amener à l'unité de connexion les extrémités aval dans l'ordre avantageux de connexion suivant: (55a), (55b), (55c),(55d),(55e),(55j),(55i),(55h) et (55g).

Le programme de l'ordinateur prédéterminé par l'opérateur commande de fabriquer les fils dans l'ordre avantageux dans lequel il faut disposer des extrémités aval qui vont sur le boitier (55) conformément à l'ordre avantageux de connexion ci-dessus, soit: (55a), (55b), (55c), (55d), (55e), (55j), (55i), (55h) et (55g) qui sera le plus en amont sur le convoyeur et les tronçons de fils sont découpés et disposés sur le transfert dans l'ordre suivant: (57a), (57b), (57d), (57f), (57h), (57i), (57g), (57e) et (57c) qui sera le plus en amont.

Les extrémités se présentent avant l'unité de permutation dans l'ordre suivant : (57a) aval, (57a) amont, (57b) aval, (57b) amont, (57d) aval, (57d) amont, (57f) aval, (57f) amont, (57h) aval, (57h) amont, (57i) aval, (57i) amont, (57g) aval, (57g) amont, (57e) aval, (57e) amont, (57c) aval et enfin (57c) amont qui sera la plus en amont.

Cet ordre est avantageux pour le boitier (55) mais il n'est pas optimum pour le boitier (56) et pour connecter dans un ordre préférentiel le boitier (56), il faut, à titre d'exemple, amener à l'unité de connexion les extrémités dans l'ordre avantageux de connexion suivant : (56a), (56b), (56c),(56f),(56e) (56d),(56g),(56h) et (56i) ce qui revient à présenter les extrémités amonts dans l'ordre suivant : (57h), (57f), (57d), (57e), (57g), (57i), (57c), (57b), et enfin (57a) qui sera le plus en amont sur le convoyeur.

Si les deux boitiers sont maintenus sur une même pince, le programme prédéterminé par l'opérateur peut commander de permuter deux à deux les extrémités amont à connecter sur le boitier pour obtenir l'ordre avantageux dans lequel il faut disposer des extrémités amont qui vont sur le boitier (56), conformément à l'ordre avantageux de connection ci-dessus, sans qu'il soit nécessaire de séparer l'ensemble des extrémités qui vont sur le boitier (55) de celles qui vont sur le boitier (56) soit:
(57a) aval, (57h) amont, (57b) aval, (57f) amont, (57d) aval, (57d) amont, (57f) aval, (57e) amont, (57h) aval, (57g) amont, (57i) aval, (57i) amont, (57g) aval, (57c) amont, (57e) aval, (57b) amont, (57c) aval et enfin (57a) amont.

Si les deux boitiers sont maintenus sur deux pinces distinctes, le programme prédéterminé par l'opérateur peut commander avantageusement de placer sur le convoyeur neuf pinces vides en amont de l'ensemble des tronçons et sur lesquels seront transférées par l'unité de permutation les neuf extrémités à connecter sur le boitier (56) pour obtenir l'ordre avantageux dans lequel il faut disposer les extrémités amont qui vont sur le boitier (56), conformément à l'ordre avantageux de connexion ci-dessus, et l'ensemble des extrémités qui vont sur le boitier (55) seront ainsi séparées de celles qui vont sur le boitier (56), l'ordre après l'unité de permutation est le suivant : extrémités aval à connecter sur le boitier (55):
(57a), (57b), (57d), (57f), (57h), (57i), (57g), (57e), (57c),puis toutes les extrémités amont à connecter sur le boitier (56):
(57h), (57f), (57d), (57e), (57g), (57i), (57c), (57b), et enfin (57a) qui sera le plus en amont sur le convoyeur.

Il faut noter que cette deuxième solution peut être également utilisée si les deux boitiers sont maintenus sur une même pince et dans une variante avantageuse du procédé selon l'invention, car le temps de permutation est généralement plus faible, on amène à ladite unité de permutation des pinces vides, on saisit et on prélève certaines desdites extrémités dans d'autres pinces portant des extrémités, au moyen de l'unité de permutation et on déplace lesdites extrémités prélevées dans certaines desdites pinces vides.

Un autre avantage de l'invention est de permettre de limiter le nombre de boitiers qui doivent être présentés simultanément sur une seule ou sur plusieurs unités de connexion, puisqu'il devient ainsi possible de connecter successivement des boitiers différents.

Ceci réduit avantageusement le nombre d'unités de connexions nécessaires et le nombre de composants sur une même pince-composant, le coût de la machine de câblage en est réduit et sa flexibilité en est augmentée.

Il en découle également une simplification des unités de connection qui n'ont plus à gérer l'ordre d'insertion des fils et ainsi dans un procédé avantageux selon l'invention on prélève au moyen de l'unité de connection certaines desdites extrémités sur ledit convoyeur et on les range d'une façon prédéterminée dans un boitier en les prélevant dans un ordre qui est toujours l'ordre dans lequel lesdites extrémités sont amenées à ladite unité de connection.

Selon un mode préférentiel de réalisation, un dispositif de l'invention comporte un dispositif de commande qui commande le fonctionnement de ladite unité de permutation pour réordonner les extrémités selon un ordre préférentiel pour ladite unité de connection. Le dispositif de commande peut être, avantageusement programmé et incorporé dans l'ordinateur (15).

Les figures 9 et 10 représentent un mode de réalisation préférentiel de l'invention dans lequel l'unité de permutation réordonne avantageusement tout ou partie des extrémités de fils en les rangeant dans des pinces de groupe ou d'ensemble c'est à dire des pinces qui permettent de saisir et de maintenir plusieurs fils dans un ordre donné et dans un espace réduit.

L'unité de chargement (5), les unités de traitement d'extrémités (20) ne sont représentées que sur la figure 10 tandis que l'unité de permutation (21) et deux unités de connection sont symbolisées en (32) et (32′); il est avantageux de disposer sur un tel équipement plusieurs unités de chargement pour obtenir une diversité de fils.

A l'extrémité amont du convoyeur (1) est disposé un dispositif de chargement de pinces (60a) et à l'extrémité aval un dispositif similaire (60b).

Parallèlement au convoyeur (1) se trouve un deuxième convoyeur (1′) à accumulation capable de transférer les mêmes pinces que le premier, qui est du type connu à bande de friction et dont le déplacement est à l'inverse du premier, de sorte qu'il ramène les pinces de l'aval vers l'amont.

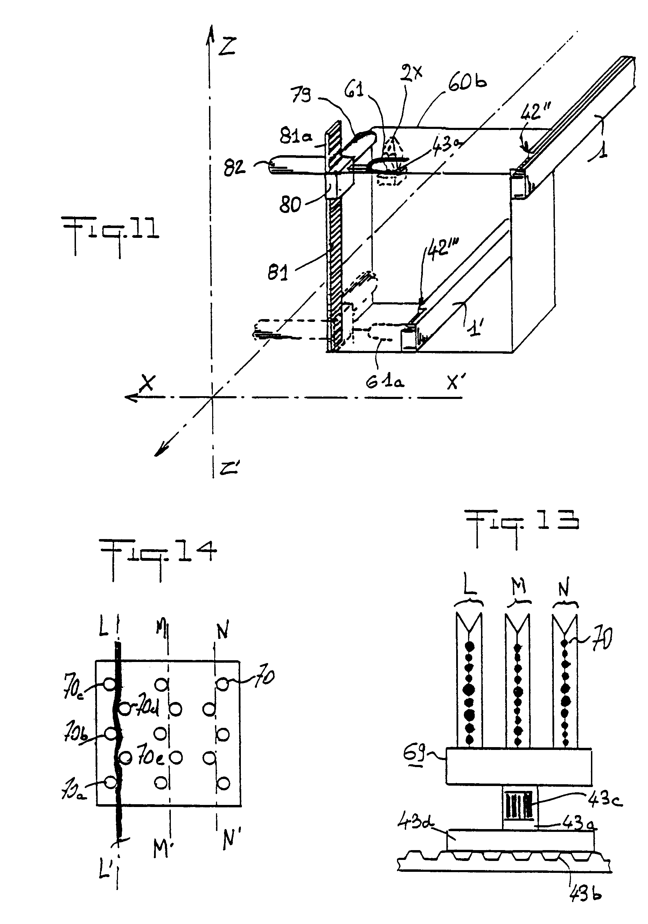

La figure 11 montre schématiquement un mode de réalisation des deux dispositifs de chargement similaires (60a) et (60b) dont seul l'emplacement est représenté schématiquement sur la figure 1 qui permettent de transférer les pinces d'un convoyeur à l'autre.

La figure 11 montre un mode de réalisation du dispositif (60b) constitué principalement d'un manipulateur à cycles carrés et à deux degrés de liberté, muni d'une pince (61) qui vient saisir le socle (43) au niveau du pied (43a) d'une pince (2X), qui retire cette pince au travers d'une découpe (42˝) dans le convoyeur selon un mouvement selon l'axe X′X, qui la descend au niveau du convoyeur (1′) en position (61a), qui transporte et met en place la pince sur le convoyeur (1′) au travers de la découpe (42‴) et retourne vide recommencer le même cycle. Ce manipulateur peut être un manipulateur à deux axes du commerce ou bien comme représenté par la figure 11 un chariot (80) mobile le long d'une crémaillère (81) sous l'effet du moteur (79) entrainant un pignon engrennant sur ladite crémaillère. Le vérin (82) qui est embarqué et qui se déplace avec le chariot (80) est avantageusement du type électrique afin de pouvoir s'arrêter en diverses positions intermédiaires et satisfaire à toutes les variantes de dispositifs voisins de (60b). La pince (61) est avantageusement réalisée de même, de façon à pouvoir saisir indifféremment le pied d'une pince d'extrémité, d'une pince de groupe ou d'une pince-composant. Une telle pince (61) peut être réalisée en juxtaposant deux pinces et en commandant celle qui correspond à la position du pied de la pince à déplacer.

La figure 9 montre que le convoyeur de retour (1′) du type à accumulation comprend en outre un dispositif de butée (64) qui maintient l'ensemble des pinces stockées sur ce convoyeur et ne les laisse passer que une à une vers la butée (63) sur la commande de l'ordinateur (15). Cette butée se déplace selon l'axe X′X et bloque la pince au niveau du pied (42a). Pour laisser passer une pince et une seule l'ordinateur la recule le temps de laisser passer le pied de cette pince et l'engage à nouveau pour bloquer le pied de la pince suivante. Cette butée peut être réalisée par un simple vérin, fixé sur le convoyeur et dont la tige se déplace selon l'axe X′X pour interférer avec le pied de la pince une fois sortie et ne pas gêner le déplacement de la pince une fois rentrée.

Selon l'exemple de réalisation de figure 9 et figure 10, les convoyeurs (65a) et (65b) sont également munis d'une butée (64). En ce qui concerne les convoyeurs (1′) et (65a), l'ordinateur peut selon un programme prédéterminé commander une butée, par exemple selon les figures 9 et 10, libérer une pince du convoyeur qui vient se référencer sur une butée fixe (63), saisir cette pince (2Y) au moyen de la pince (61) du dispositif (60a) et la dégager en passant au travers de tous les convoyeurs qui comportent des dégagements tels que (42) sur les deux faces selon l'axe X′X. En ce qui concerne le convoyeur (65b), ce convoyeur n'est pas destiné à stocker des pinces-composant pour que le dispositif de chargement (60a) les mette en place sur le convoyeur (1); il n'y a pas de butée fixe (63) et ces pinces-composant sont entrainées par friction jusqu'au bout du convoyeur (65b) d'où elles tombent en vrac dans un bac de récupération (69). Un opérateur récupère ces pinces-composant vides, met en place dans les alvéoles les composants adaptés et les empile alors dans les chargeurs (40) ou (40′).

Selon une autre variante de réalisation préférentielle, le convoyeur (65b) comporte des butées et permet comme le convoyeur (65a) la mise en place des pinces-composant sur le convoyeur (1). Le long du chemin de transfert ladite pince-composant est présentée à une unité de chargement automatique de composant dans une pince-composant réalisée par exemple en associant un bol vibrant et un manipulateur de types connus, qui met automatiquement en place les composants dans les alvéoles de ladite pince-composant. Dans cette solution l'unité de connexion prélève la pince-composant sur le convoyeur (1) au lieu du convoyeur (33).

Selon une autre variante qui est une combinaison de moyens des deux précédentes réalisations, la mise en place en automatique des composants est effectuée par une unité de mise en place automatique de composants qui est située sur un convoyeur qui réunit le convoyeur (65b) aux convoyeurs (33). Ce nouveau convoyeur est muni de dispositifs de chargement du type (60a) qui transfèrent les pinces-composant vers des convoyeurs tels que (33).

Les figures 9 et 10 montrent le dispositif de tri (66) qui est un sous-ensemble du dispositif (60a) dans lequel le mouvement en translation vertical est supprimé. La butée (64a) est escamotable pour laisser continuer sur le convoyeur (1′) les pinces qu'il n'y a pas lieu de transférer sur l'un des convoyeurs (65a) ou (65b).

Ces figures 9 et 10 représentent un dispositif selon l'invention qui comprend selon un mode de réalisation préférentiel des pinces de divers types et d'usage spécifique destinées à connecter automatiquement des extrémités de tronçons de fils conducteurs ou de fibres optiques à des réceptacles adaptés de composants, transportables par un même convoyeur, séparables dudit convoyeur, et qui comportent tous les mêmes moyens d'interface avec ledit convoyeur et une inscription lisible automatiquement permettant de connaitre leur type.

Le long du convoyeur (1′) est disposé un dispositif (68) de lecture à distance, par exemple du type à codes barre, qui lit le type de la pince (2Z) arrêtée par la butée (64b) et qui transmet à l'ordinateur (15) un signal caractéristique de ce type. A partir de ce signal ou de cette information de type l'ordinateur peut commander la butée (64b) pour permettre à la pince (2Z) de venir en butée sur la butée (63a) alors activée, puis d'escamoter cette butée si la pince doit être transférée sur le convoyeur (1′) ou bien de transférer cette pince au moyen d'une pince (61) sur les convoyeurs (65a) ou (65b).

La figure 9 montre les convoyeurs (65a) (65b) qui sont du type à accumulation et munis d'une courroie de friction comme le convoyeur (1′) et qui ramènent les pinces vers l'amont de la machine de câblage et stockent ces pinces ainsi triées par le dispositif (66).

Les figures 4, 5, 6 et 13 montrent un exemple de réalisation d'un tel moyen d'interface contitué d'un socle (43d) muni d'une double crémaillère (43b), d'un pied (43a) sur lequel est inscrit un code barre (43c) représentant au moins le type de pince et avantageusement son numéro individuel. Selon un mode de réalisation préférentiel un dispositif selon l'invention comprend avantageusement des pinces de divers types et d'usage spécifique destinées à connecter automatiquement des extrémités de tronçons de fils conducteurs ou de fibres optiques à des réceptacles adaptés de composants, transportables par un même convoyeur, séparables dudit convoyeur, et qui peuvent être engagées ou retirées mécaniquement dudit convoyeur et qui comportent toutes les mêmes moyens d'interface avec ledit convoyeur et une inscription lisible automatiquement permettant de connaître leur type.

Avantageusement, un dispositif selon l'invention comprend également des pinces d'au moins deux types différents et des moyens pour trier lesdites pinces en fonction de leur type.

Les figure 9 et figure 10 montrent un exemple de réalisation de l'unité de permutation (21′). Cette unité est constituée d'un premier sous-ensemble (21′a) qui est du même type que l'unité de permutation (21) et un sous-ensemble (21′b) qui est du même type que le dispositif (60b).

Ainsi, selon ces mêmes figures, après avoir prélevé la pince vide (2I) sur le convoyeur (1) et au moyen d'une pince de type (60), le sous-ensemble (21′b) transfère la pince vide sur le convoyeur de retour (1′) de la même façon que le dispositif (60b). Le convoyeur (1′) porte une butée (64c) commandée également par l'ordinateur (15) de sorte à éviter les collisions sur le convoyeur (1′) entre les pinces que transfère l'unité (21′) avec celles déjà présentes sur le convoyeur et transférées par d'autres unités ou par le dispositif (60b).

Selon un mode de réalisation préférentiel représenté sur les figures 9 et 10, le convoyeur (1) est réalisé par la juxtaposition de deux convoyeurs placés à la suite (1a) et (1b) de sorte que leurs courroies crantées permettent le transfert des pinces de l'un à l'autre. Chacun de ces convoyeurs est muni de sa propre motorisation et peut être déplacé indépendemment de l'autre.Avantageusement, la juxtaposition des deux convoyeurs (1a) et (1b) est effectuée en vis à vis d'une des dernières positions couvertes par l'unité de permutation et un dispositif d'éjection des pinces est associé à l'extrémité aval du premier convoyeur (1a). Selon l'exemple non limitatif représenté en figures 9 et 10, cela permet, lorsqu'une pince a été éjectée et selon un mode de commande avantageux, à l'ordinateur (15) de déplacer uniquement le convoyeur (1a) de façon à venir combler l'emplacement vide. Ainsi il n'existe pas d'emplacements vides inutiles sur le convoyeur (1b) et l'unité de permutation (21′) peut transférer dans une même pince de groupe un nombre élevé d'extrémités indépendamment du nombre de pinces que couvre le déplacement des pinces (22) et (23).

Les figures 9 et 10 montrent un exemple de réalisation des unités de connexion (32). Cette unité est constituée d'un premier sous-ensemble (32′a) qui est du même type que l'unité de connexion (32) et un sous-ensemble (32′b) qui est du même type que le dispositif (60b).

Le sous-ensemble (32′b) possède en plus du dispositif (60b) la possibilité de maintenir la pince dans la position intermédiaire représentée sur la figure 9 en (53′I), position surélevée pour que le fil, ou les fils si c'est une pince de groupe, qu'elle maintient n'interfère pas avec les pinces transportées par le convoyeur (1). Cette fonction peut être réalisée par un manipulateur de type connu qui déplace la pince sous le contrôle de l'ordinateur (15) ou bien encore, avantageusement par un dispositif tel que celui de la figure 11 avec lequel on transfère et on maintient la pince d'extrémité ou de groupe en position (53I) en déplaçant le chariot (80) à l'extrémité haute (81a) de la crémaillère et en arrêtant le vérin électrique (82) dans une position intermédiaire.

Ainsi, selon ces mêmes figures, après avoir prélevé la pince (2′I) sur le convoyeur (1) et au moyen d'une pince de type (60), le sous-ensemble (32′b) transfère et maintient la pince (2I) dans la position surélevée, figurée, le temps que le sous-ensemble (32′b) prélève l'extrémité (3I). Le sous-ensemble (32′a) transfère alors la pince vide sur le convoyeur de retour (1′) de la même façon que le dispositif (60b). Le convoyeur (1′) porte une butée (64d) commandée également par l'ordinateur (15) de sorte à éviter les collisions sur le convoyeur (1′) entre les pinces que transfère l'unité (32′) avec celles déjà présentes sur le convoyeur et transférées par d'autres unités ou par le dispositif (60b).

Avantageusement, dans un procédé selon l'invention on associe à ladite unité de connexion et au dit convoyeur des moyens pour retirer au moins l'une desdites pinces dudit convoyeur et la présenter à l'unité de connexion.

Avantageusement on recycle ladite pince sans la remettre sur ledit convoyeur. Ainsi, pendant que l'unité de connection connecte le ou les fils présents sur la pince enlevée du transfert, les pinces qui suivent immédiatement en amont ladite pince enlevée et qui maintiennent des extrémités qui ne doivent pas être connectées par cette unité de connection peuvent continuer.

Selon un autre mode de réalisation, le sous-ensemble (32′b) ne présente pas la pince dans une position intermédiaire et n'a que pour fonction d'éjecter et recycler la pince vidée de son fil par le sous-ensemble (31′a). Avantageusement on retire dudit convoyeur des pinces déchargées de leurs extrémités par l'unité de connexion.

Les figures 4, 5 et 6 montrent un mode de réalisation des pinces d'extrémité et leur système d'ouverture (27). Une telle pince comprend deux becs (73a), (73b) qui maintiennent le fil en collaboration avec un piston (74a) à l'intérieur d'un volume (83) réalisé par l'intersection des formes correspondantes desdits becs et piston. Les becs se ferment sous l'action des ressorts (73f),(73e) en pivotant autour des axes (73d) et (73c); le piston est poussé vers le haut sous l'effet du ressort (74b).

La figure 5 montre un exemple de réalisation du système d'ouverture (27) qui comprend une pièce (77) mobile sur les axes (76) et déplacée par le vérin (75). La pince d'extrémité comporte deux plots (78) fixés sur les becs. Dans la position représentée sur la figure 5, le système d'ouverture n'agit pas sur la pince. Lorsque le vérin (75) est actionné la pièce (77) appuie sur les plots (78) et ouvre les becs.

Les figures 9 et 10 montrent également la succession d'opérations réalisées pour fabriquer le faisceau représenté figure 8, en cours de fabrication selon un cycle continu.

Ces figures 9 et 10 montrent au niveau de la zône repérée (I), zône allant de la pince (2d′) à la pince de groupe (72w), la première phase de la fabrication :
- le dispositif de chargement (60a) a mis en place deux pinces de groupes (72v),(72w) et dix-huit pinces d'extrémités (2d′) à (2u′);
- le convoyeur transfère ces pinces devant diverses unités (5), (4) et (20) qui mettent en place les extrémités ou qui les modifient;
- les pinces d'extrémités maintiennent les extrémités des neuf fils du faisceau mis en place par l'unité de chargement; ces fils sont régulièrement disposées dans des paires de pinces consécutives.
- les fils sont rangés de l'amont vers l'aval dans l'ordre suivant, inverse de l'ordre optimum retenu précédemment, selon le besoin de cette réalisation particulière: (57a), (57b), (57d), (57f), (57h), (57i), (57g), (57e) et (57c) qui sera le plus en aval.

Ces figures 9 et 10 montrent au niveau de la zône repérée (II), zône allant de la pince de groupe (72v) à la pince de groupe (72C), la deuxième phase de la fabrication:
- les pinces de groupe sont disposées dans le champ d'action des pinces de transfert (22) et (23 ) de l'unité de permutation (21′);
- la pince d'extrémité la plus en aval est vide et elle en train d'être éjectée par le sous-ensemble (21′a) de cette unité de permutation vers le circuit de retour où elle sera triée pour être réutilisée, et de sorte qu'une nouvelle pince d'extrémité pourra être amenée dans la même position pour continuer le transfert des extrémités dans les pinces de groupe (72A) et (72B) en ne déplaçant que le transfert (1a) et donc sans déplacer ces pinces de groupe.
- les neuf extrémités amont sont toutes empilées dans un jeu de tiges en quinconce de la pince (72B′) et l'ordre en partant du haut vers le bas, c'est à dire l'ordre dans lequel les extrémités seront dépilées, est le suivant: (57h), (57f), (57d), (57e), (57g), (57i), (57c), (57b), et enfin (57a), cet ordre est l'ordre préférentiel de connexion définit précédemment;
- les neuf extrémités amont ainsi empilées dans la pince de groupe (72B) rejoignent selon le toron (71a) les cinq extrémités aval déjà empilées dans la pince de groupe (72A) et selon quatre fils dispersés les quatre extrémités aval encore maintenues individuellement dans des pinces d'extrémité;
- seulement cinq des neuf extrémités aval sont empilées dans un jeu de tige en quinconce de la pince (72A) et l'ordre en partant du haut vers le bas est le suivant: (57h), (57i), (57g), (57e), (57c);
- les quatre extrémités restantes seront prélevées et empilées et par l'unité de permutation ou de transfert de sorte que l'ordre en partant du haut vers le bas, une fois cette phase terminée, c'est à dire l'ordre dans lequel les extrémités seront dépilées, soit le suivant: (57a), (57b), (57d), (57f), (57h), (57i), (57g), (57e), (57c) cet ordre est l'ordre préférentiel de connexion défini précédemment.

L'exemple a été choisi de façon à expliquer un fonctionnement particulier lors de la mise en place des fils dans les pinces de groupe compte tenu de la longueur limitée de l'unité de permutation et du champ que couvre ses pinces.

Dans l'exemple représenté la première extrémité à empiler dans la pince de groupe (72B) est l'extrémité aval du fil (57a); cette extrémité est maintenue dans la pince d'extrémité (2e′) qui se trouve la plus en aval, alors que la pince de groupe se trouve la plus en amont et la distance entre ces pinces est de dix-neuf pas; or lorsque la pince de groupe (72B) est dans la position représentée sur la figure 9, l'unité de permutation accède au plus au niveau de la pince (72v) soit à une distance de treize pas.

Une première solution est de limiter la production aux seuls cas que peut traiter directement l'unité de permutation, mais il est avantageux que l'unité de permutation transfère temporairement certains fils dans une position d'attente pour les reprendre ensuite et les ranger ainsi dans un ordre préférentiel; cette réalisation avantageuse permet d'élargir le champ d'action du dispositif selon l'invention sans augmenter la zône couverte par l'unité de permutation.

La pince de groupe (72B) est conforme à l'exemple de réalisation représenté par les figures 13 et 14 qui montre qu'une pince de groupe comprend trois jeux de tiges de stockage: (L), (M) et (N).

Selon un procédé avantageux, lorsque l'unité de permutation n'a pas accés à une extrémité qu'elle doit empiler en dessous d'une extrémité maintenue par une pince d'extrémité qui va être transférée au sous-ensemble d'éjection (21′a) l'ordinateur commande la séquence d'opération suivante:
-a-l'unité de permutation prélève et empile ladite extrémité' dans le jeux de tiges (C),
-b-l'opération (a) est répétée autant de fois que nécessaire jusqu'à ce que l'extrémité à empiler en dessous arrive dans le champ de l'unité de permutation qui la prélève et la met en place dans le jeux de tiges (A) et alors intervient la séquence suivante:
-c-si la plus haute des extrémités empilées dans les tiges (C) doit venir immédiatement au dessus de la dernière extrémité empilée dans les tiges (A), l'unité de permutation prélève et transfère cette extrémité dans les tiges (A) et le cycle continue à la phase (d) ci-dessous;
   -sinon elle la transfère dans les tiges (B) et la phase (b) reprend;
-d-l'ordinateur 15 connait la séquence préprogrammée de transfert et s'il existe une autre extrémité critique qui satisfasse à la phase (c) c'est à dire qui doive venir immédiatement au dessus de la dernière extrémité empilée dans les tiges (A), l'ordinateur commande à l'unité de permutation de reprendre le cycle c en prélevant les extrémités dans le jeux de tige (B) ou (C) qui maintient ladite extrémité critique et non plus systématiquement dans le jeux de tiges (C);
   -sinon l'ordinateur suspend l'exécution de ce cycle et l'unité de permutation continue à empiler les extrémités qu'elle saisit sur le transfert soit jusqu'à ce que vienne le tour de l'une des extrémités stockées dans les tiges (B) ou (C) et alors l'ordinateur commande l'exécution de la phase (d) soit jusqu'à ce que vienne le tour d'une extrémité que l'unité de permutation ne peut pas saisir et alors l'ordinateur commande à l'unité de permutation de transférer toutes les extrémités sur les tiges (B) vers les tiges (C) puis d'exécuter la phase (a).

Selon un autre mode de réalisation avantageux les tiges (B) et (C) ou une multiplicité de telles tiges peuvent ne pas être solidaires des pinces de groupe.

La solution selon laquelle ces tiges sont solidaires des pinces est tout aussi avantageuse car la séquence d'opération décrite dans le procédé ci-dessus doit être réalisée simultanément autant de fois qu'il y a de pinces de groupe à traiter en simultanéité; la modularité des pinces groupe et des tiges (B) et (C) correspondent au problème à traiter.

Les figures 9 et 10 montrent au niveau de la zône repérée (III), zône allant de la pince de groupe (72D) à la pince-composant (34e) exclue, la troisième phase de la fabrication:
- l'unité de connexion (40′) est en train de connecter, dans l'ordre préférentiel, les extrémités aval maintenues dans la pince de groupe (72E) sur le connecteur (39′) fixé sur la pince-composant (34′); les extrémités aval restant à connecter forment le toron de fils ((71c) entre les pinces de groupe (72E) et (72F), et ceux déjà connecté forment le toron (71d) entre le connecteur (39′) et la pince de groupe (72F);
- aprés l'insertion de la dernière extrémité, sous la commande de l'ordinateur, la pince de groupe (72E) vidée est recyclée et remplacée par la pince (72D), le convoyeur est avancé de deux pas (l'ordinateur faisant exécuter les actions correspondant à chacun des pas par les diverses autres unités) et l'unité de connexion (40′) place la pince-composant sur le convoyeur dans l'emplacement laissé vide sur le transfert;
- l'unité de connexion (40˝) est en train de connecter, dans l'ordre préférentiel, les extrémités amont maintenues dans la pince de groupe (72G) sur le connecteur (39˝) fixé sur la pince-composant (34˝);
- après l'insertion de la dernière extrémité, la pince de groupe (72G) est recyclée et remplacée par la pince (72D′), l'unité de connexion (40˝) place a pince-composant sur le convoyeur dans l'emplacement laissé vide sur le transfert.

Ces figures 9 et 10 montrent au niveau de la zône repérée (IV), zône allant de la pince composant (34e) à la fin du convoyeur (1b), la quatrième phase de la fabrication:
- le faisceau est terminé il convient de l'enlever avant que les pinces vides soient recyclées;
- Un opérateur intervient dans cette zone pour prélèver les faisceaux. Lorsqu'un faisceau est terminé et transféré à l'extrémité aval du convoyeur (1), l'ordinateur suspend le fonctionnement de la machine de câblage après avoir ouvert les pinces d'extrémité (3) situées éventuellement dans cette zone IV au moyen des mécanismes d'ouverture (27) qui leur sont individuellement associés. Après que l'opérateur ait dégagé tous les fils des pinces, qu'il ait retiré tous les composants des pinces-composant qui les maintenaient et qu'il dispose ainsi du faisceau terminé, il appuie sur le bouton (62) pour indiquer à l'ordinateur que son intervention est terminée. L'ordinateur recommence alors à envoyer les ordres de fabrication prédéterminés et programmés par l'opérateur avant le début du cycle de fabrication en cours.

Dans les réalisations de l'invention décrites ci-dessus, les extrémités présentées aux unités de permutation et de connexion sont chacune dans une pince. Ceci présente un inconvénient car le fil doit être plus long que la distance entre deux pinces et cette distance est égale au nombre de pas entre les pinces.

Pour éviter cet inconvénient et élargir les capacités de la machine de câblage, certaines desdites pinces permettent de saisir et de maintenir plusieurs fils dans un ordre donné et dans un espace réduit.

Les figures 13 et 14 représentent un mode de réalisation, à titre d'exemple non limitatif, d'une telle pince comprenant comme les autres pinces les mêmes moyens d'interface avec ledit convoyeur et une inscription lisible automatiquement permettant de connaitre leur type .

Ce type de pince comporte un plateau (69) dans lequel sont fixées une pluralité de tiges (70). Les tiges sont implantées selon des axes tels que L′L, M′M et N′N qui sont eux-mêmes parallèles aux dents de même sens de la face inférieure (43b).

La distance entre les axes des tiges disposées de part et d'autre des axes L′L, M′M et N′N est du même ordre de grandeur que le diamètre de l'une des tiges et inférieur à la longueur que représente ce diamètre augmenté du diamètre du fil de plus petit diamètre qu'elle ait à maintenir. La distance entre les deux droites tangentes, et les plus proches, aux deux groupes de tiges est inférieure à la longueur que représente le diamètre du fil de plus petit diamètre qu'elle ait à maintenir.

Le maintien du fil qui est déformé pour circuler alternativement entre les tiges (70a), (70e), (70b), (70d) et (70c) se fait par déformation.

Avantageusement le haut des tiges est taillé selon un biseau vers l'intérieur comme l'enseigne la figure 13 de façon à ce qu'un fil présenté tendu et selon un axe tel que L′L soit guidé par ces biseaux à s'engager et à circuler alternativement entre les tiges disposés en quinconce.

Une telle pince est capable de maintenir des fils de plusieurs diamètres qui doivent toutefois rester dans un rapport de diamètres de quelques unités pour les fils souples généralement utilisés ou dans un rapport plus faible si les fils sont plus rigides.

Plusieurs fils ainsi admis peuvent être empilés verticalement sur une même rangée en quinconce comme (L), comme (M) ou comme (N). L'ordre de ces fils est maintenu car les fils ne peuvent pas changer de niveau et une multiplicité de fils sont maintenus dans un espace restreint.

Une telle pince du type pour saisir et maintenir plusieurs extrémités de fils qui comprend un ensemble de tiges disposées en quinconce pour maintenir les fils est un dispositif préférentiel selon l'invention.

Il convient toutefois de noter que les fils d'une même rangée doivent être désempilés dans l'ordre inverse de leur rangement.

Ces pinces sont plus spécialement adaptées à la zône de transfert qui commence à l'unité de permutation et s'étend jusqu'aux unités de connexion et selon une réalisation avantageuse les pinces de ce type sont introduites sur le convoyeur au niveau de l'unité de permutation et rétirées de ce convoyeur par les unités de connexion.

Avantageusement, l'unité de permutation transfère certaines desdites extrémités dans des pinces permettant de saisir et de maintenir plusieurs fils dans un ordre donné et dans un espace réduit.

L'unité de permutation a alors pour fonction de ranger les extrémités maintenues deux à deux dans deux pinces consécutives du type qui permet de saisir et maintenir plusieurs fils dans un ordre donné et dans un espace réduit.

Les figures 15 et figure 16 représentent une vue de face et une coupe transversale d'un mode de réalisation d'une pince-composant selon l'invention. Outre le socle (43d) et le pied (43a) celle-ci est constituée par une plaque ou un panneau rectangulaire plan (84) comportant des moyens pour fixer chaque composant dans une position bien déterminée dudit panneau de telle sorte que les alvéoles adaptés desdits composants soient perpendiculaires dudit panneau.

Les figures 15 et 16 représentent un mode de réalisation préférentiel dans lequel les moyens de fixation des composants sur le panneau sont des alvéoles (86) qui traversent le panneau (84) et qui sont ouverts à leurs deux extrémités.

Les figures 15 et 16 représentent un mode de réalisation préférentiel dans lequel les alvéoles (86) ont tous la même dimension par exemple un carré dont le coté est supérieur à la plus grande dimension du plus grand composant. Dans ce cas toutes lesdites pinces sont identiques et chaque composant est placé dans un alvéole d'adaptation (85) qui comporte des moyens standards pour se fixer sur ladite pince et les moyens de fixation spécifiques au dit composant.

Le détail de forme (85a) de l'alvéole d'adaptation est destiné à absorber l'effort de poussée existant lors de la connexion et qui vient en appui sur la face avant du panneau (84), c'est à dire la face située du coté du manipulateur de connexion (48).

Les moyens de fixation réalisés en fonction du composant et généralement constitués simplement d'une simple lame élastique appuyant sur le composant, sont solidaires de cet alvéole d'adaptation qui comprend également une découpe adaptée à la forme du composant.

Préférentiellement l'alvéole d'adaptation comporte une découpe (85a) qui débouche de part en part et un détail de forme (85b) qui absorbe l'effort d'insertion de l'extrémité dans le composant. Ainsi, l'accès aux réceptacles de connection des boitiers connecteurs est non seulement possible du coté de l'introduction des extrémités dans lesdits receptacles mais également du coté opposé des réceptacles ce qui permet de tester en automatique lesdites connexions.

Les composants (39) portés sur une même pince-composant peuvent avantageusement être tous les composants d'une même branche d'un faisceau et les alvéoles adaptés peuvent être de divers types comme (87a) qui est un alvéole femelle borgne, (87b) qui est un alvéole male et (87c) qui est un alvéole débouchant du connecteur (39c).

Les figures 18 et 19 représentent l'unité de permutation selon une vue perspective partielle de l'invention.

La figure 18 montre un mode de réalisation du stockage partiel réalisé modulairement au moyen de pinces (72) portant trois jeux de tiges en quinconce.

La figure 19 montre un mode de réalisation du stockage partiel réalisé de façon fixe (89). Le chariot (24) dispose de moyens dont le vérin (24′) pour se déplacer selon l'axe X′X permettant aux pinces (22) et (23) de transférer les fils dans le dispositif à tiges (89), les pinces (72) portant un jeux de tiges en quinconce.

## Revendications

1. Procédé pour connecter automatiquement des extrémités (3a,3b,...) de tronçons (4a,4b,..., 57a...57j) de fils conducteurs ou de fibres optiques à, pour chaque extrémité respectivement, une borne de connexion (55a...55j, 56a...56j), mâle (87b) ou femelle (87a,87c), qui lui est affectée sur la face avant d'un boitier récepteur isolant (85,39a,39b,39c,55,56), ou "composant", typiquement à des bornes d'un composant électrique ou à des alvéoles d'un boitier connecteur, sur laquelle ces bornes de connexion forment une mosaique (55a...55j, 56a...56j) d'alvéoles femelles (87a,87c) ou de bornes mâles (87b) de connexion respective d'une extrémité de tronçon de fil conducteur ou de fibre optique, ce procédé étant du type selon lequel :
- on fait avancer par intermittence un convoyeur de transfert (1) muni de pinces (2a,2b,...) pour maintenir et saisir lesdites extrémités (3a,3b,...),
- on saisit, maintient et déplace par intermittence ces extrémités selon un certain chemin de transfert (Y′,Y) au moyen desdites pinces (2a,2b,...) de ce convoyeur (1),
- on présente éventuellement, au moyen de ces pinces, certaines de ces extrémités à des unités de traitement (4,20) qui sont disposées latéralement le long dudit chemin de transfert (Y′,Y), et on modifie éventuellement ces extrémités au moyen de ces unités de traitement,
- on modifie alors l'ordre de certaines de ces extrémités sur ce convoyeur (1),
- on présente ensuite, au moyen de ces pinces, plusieurs desdites extrémités, à au moins une unité de connexion (32) qui comprend des moyens (48) pour prélever une seule dite extrémité et la connecter à une borne d'un desdits composants (39) qu'elle traite, et, au moyen de cette unité de connexion (32), on prélève certaines desdites seules extrémités dans lesdites pinces sur ledit convoyeur (1) et on les connecte chacune à une borne prédéterminée d'un desdits composants (39), en les prélevant dans un ordre qui peut être différent de l'ordre dans lequel ces extrémités sont amenées, par ledit convoyeur (1), à ladite unité de connexion (32).

2. Procédé selon la revendication 1, caractérisé en ce qu'on utilise au moins une unité de permutation (21) pour effectuer ladite modification éventuelle de l'ordre de certaines de ces extrémités sur ce convoyeur (1).

3. Procédé selon la revendication 2, caractérisé en ce que l'on amène, à ladite unité de permutation (21) et sur ce convoyeur (1), des pinces vides (2p), on saisit et prélève, au moyen de cette unité de permutation (21), certaines (3m) desdites extrémités dans d'autres pinces (2m) dudit convoyeur (1) qui portent ces extrémités, et on transfère ces extrémités (3m) dans certaines (2p) desdites pinces vides.

4. Procédé selon l'une des revendications 1 à 3, caractérisé en ce que les pinces transportées par ledit convoyeur sont de divers types (73,72,74).

5. Procédé selon l'une quelconque des revendications 2 à 4, caractérisé en ce que certaines (72) desdites pinces permettent de saisir et de maintenir plusieurs fils dans un ordre donné et dans un espace réduit.

6. Procédé selon la revendication 5, caractérisé en ce que lesdites pinces (72) du type qui permet de saisir et de maintenir plusieurs fils dans un ordre donné et dans un espace réduit sont introduites sur le convoyeur (1) au niveau de l'unité de permutation (21).

7. Procédé selon l'une quelconque des précédentes revendications, caractérisé en ce que les pinces (2,73,72,34) sont séparables du convoyeur (1) et peuvent être engagées mécaniquement sur celui-ci ou retirées mécaniquement de celui-ci.

8. Procédé selon la revendication 7, caractérisé en ce que l'on retire du convoyeur (1) des pinces déchargées.

9. Procédé selon l'une des revendications 2 à 8, caractérisé en ce que l'unité de permutation (21) transfère certaines desdites extrémités dans des pinces (72) permettant de saisir et de maintenir plusieurs fils dans un ordre donné et dans un espace réduit.

10. Procédé selon l'une des revendications 2 à 9, caractérisé en ce que l'on prévoit un dispositif de commande (15) qui commande le fonctionnement de ladite unité de permutation (21) pour réordonner les extrémités selon un ordre préférentiel pour ladite unité de connexion (32).

11. Procédé selon l'une des revendications 1 à 10, caractérisé en ce que l'on prélève au moyen de l'unité de connexion (32) certaines desdites extrémités sur ledit convoyeur (1) et on les connecte chacune d'une façon prédéterminée à une borne respective d'un composant (55,56), en les prélevant dans un ordre qui est toujours l'ordre dans lequel lesdites extrémités sont amenées à ladite unité de connexion (32).

12. Procédé selon l'une des revendications 1 à 11, caractérisé en ce que l'on utilise un autre convoyeur (33) pour convoyer, jusque là (44,48) où sont effectuées les connexions desdites extrémités sur lesdites bornes ou alvéoles desdits composants, un ensemble de pinces (34) aptes à saisir et maintenir au moins un composant (39), ou "pinces-composants".

13. Procédé selon la revendication 12, caractérisé en ce que l'on recycle ensuite chaque pince-composant (34).

14. Procédé selon la revendication 12, caractérisé en ce que l'on évacue, lorsque des connexions sur le ou les composants (39) maintenues par une pince-composant (34) sont réalisées, cette pince-composant sur le convoyeur (1) d'amenée desdites extrémités de fils, des places vides (53E) étant prévues à l'avance en conséquence sur ce convoyeur (1) pour pouvoir y transférer ces pinces-composants (34).

15. Procédé selon l'une des revendications 12 à 14, caractérisé en ce que l'on associe à l'unité de connexion (32,48) et audit autre convoyeur (33) des moyens (44) pour retirer au moins une desdites pinces-composants (34) de ce convoyeur (33) et la présenter à cette unité de connexion.

16. Procédé selon l'une des revendications 1 à 15, caractérisé :
. en ce que l'on dispose plusieurs unités de connexion (32), latéralement le long dudit chemin de transfert (Y′,Y)
. et en ce que l'on prévoit un dispositif global de commande (15) qui commande le fonctionnement desdites unités de connexion (32) de telle manière qu'une extrémité (3a. .. ) correspondant à l'une particulière desdites unités de connexion est présentée par ledit convoyeur à ladite unité de connexion particulière en réponse à un premier signal émis par ledit dispositif global de commande (15) et ladite unité de connexion particulière prélève ladite extrémité et la connecte à un composant particulier (39) en réponse à un second signal émis par ledit dispositif global de commande et de sorte que les extrémités qui ne correspondent pas à ladite unité de connexion particulière sautent cette unité de connexion particulière.

17. Procédé selon la revendication 3, caractérisé en ce que l'on prévoit des moyens (72,89) de stockage temporaire desdites certaines extrémités (3m), après les avoir prélevées dans lesdites autres pinces (2m) dudit convoyeur (1) et avant de les transférer dans lesdites pinces vides (2p).

18. Procédé selon la revendication 17, caractérisé en ce que l'on utilise des moyens de stockage temporaire (72) qui font partie desdites autres pinces.

19. Dispositif de connexion automatiquement des extrémités (3a,3b,...) de tronçons (4a,4b,..., 57a...57j) de fils conducteurs ou de fibres optiques à, pour chaque extrémité respectivement, une borne de connexion (55a...55j, 56a...56j), mâle (87b) ou femelle (87a,87c), qui lui est affectée sur la face avant d'un boitier récepteur isolant (85,39a,39b,39c,55,56), ou "composant", typiquement à des bornes d'un composant électrique ou à des alvéoles d'un boitier connecteur, sur laquelle ces bornes de connexion forment une mosaique (55a...55j, 56a...56j) d'alvéoles femelles (87a,87c) ou de bornes mâles (87b) de connexion respective d'une extrémité de tronçon de fil conducteur ou de fibre optique, selon le procédé d'une des revendications 1 à 19, comportant :
- un convoyeur (1,33) muni de pinces (2a,2b..) permettant de transporter lesdites extrémités selon un certain chemin de transfert (Y′,Y),
. un premier manipulateur (21) muni d'au moins un moyen de préhension (23,23) et équipé de moyens (25) permettant de le déplacer d'un point à un autre du convoyeur de transfert (1) de sorte que ce premier manipulateur (21) peut saisir avec chacun desdits moyens de préhension (22,23) une seule extrémité (3m) maintenue par une des pinces (2m) du convoyeur (1) puis ouvrir ladite pince et dégager ladite extrémité de ladite pince (2m) qui devient vide puis se déplacer et engager cette seule extrémité (3m) dans une autre pince vide (2p) dudit convoyeur (1),
. au moins un deuxième manipulateur (32) dit manipulateur de connexion, disposé le long du chemin de transfert (Y′,Y) en aval du premier manipulateur (21) et équipé de moyens (48) pour prélever une dite seule extrémité et la connecter sur l'une des bornes ou alvéoles du ou des composants (39) disposés dans le champ d'action dudit manipulateur de connexion (32).

20. Dispositif selon la revendication 19, caractérisé en ce qu'il comprend des moyens (58a,58b) pour plier les fils connectés du côté opposé à celui des bornes ou alvéoles restant à connecter.

21. Dispositif selon l'une des revendications 19 ou 20, caractérisé en ce que les pinces qu'il utilise (72,73,74,34) sont au moins de deux types différents et comportent toutes les mêmes moyens d'interface (43) avec ledit (1) ou lesdits (1,33) convoyeurs, et une inscription lisible automatiquement (43c) permettant de connaitre leur type, des moyens (43c,15) étant prévus pour les trier en fonction de leur type.

22. Dispositif selon la revendication 21, caractérisé en ce qu'il utilise au moins une pince (72) pour saisir et maintenir plusieurs extrémités de fils, cette pince comprenant un ensemble de tiges (70) disposées en quinconce pour maintenir les fils.

23. Dispositif selon la revendication 22, caractérisé en ce que la distance des axes des tiges (70) disposées de part et d'autre des fils est inférieure à la longueur que représente le diamètre de ces tiges augmentée du diamètre du fil de plus petit diamètre qu'elle ait à maintenir.

24. Dispositif selon la revendication 22 ou la revendication 23, caractérisé en ce que les tiges (70) sont taillées en biseau vers l'intérieur.

25. Dispositif selon l'une des revendications 19 à 24, caractérisé en ce qu'il utilise au moins une pince (34), pour maintenir au moins un composant (39a,39b,39c), ou "pince-composant", cette pince (34) comprenant un panneau rectangulaire plan (84) comportant des moyens (85) pour fixer chaque composant (39) dans une position bien déterminée dudit panneau (84) de telle sorte que les alvéoles adaptés desdits composants soient perpendiculaires audit panneau.

26. Dispositif selon la revendication 25, caractérisé en ce que toutes les pinces-composants (34) sont identiques et en ce que chaque composant (39) est placé dans un alvéole d'adaptation (85) qui comporte les moyens standards pour se fixer sur ladite pince et les moyens de fixations spécifiques audit composant.

27. Dispositif selon l'une des revendications 25 ou 26 caractérisé en ce que l'accès aux bornes et alvéoles de connexion des composants est non seulement possible du côté de l'introduction des extrémités dans lesdits composants mais également du côté opposé (86) desdits composants.

28. Dispositif selon l'une des revendications 19 à 27, caractérisé en ce que ledit convoyeur de transfert (1) est réalisé par la juxtaposition de deux convoyeurs placés à la suite et qui permettent le transfert des pinces de l'un à l'autre et qui sont motorisés indépendamment l'un de l'autre.

29. Dispositif selon la revendication 28, caractérisé en ce que la juxtaposition des deux convoyeurs est effectuée en vis-à-vis d'une des dernières positions couvertes par l'unité de permutation (21) et en ce qu'un dispositif d'éjection des pinces est associé à l'extrémité aval du premier convoyeur.

## Patentansprüche

1. Verfahren zur automatischen Verbindung von Enden (3a, 3b, ...) der Abschnitte (4a, 4b, ... , 57a ... 57j) von Leiterdrähten oder optischen Fasern an jeweils einen Verbindungsanschluß (55a ... , 55j, 56a ..., 56j) mit Vorsprüngen (87b) oder Aussparungen (87a, 87c), der ihm auf der Vorderseite eines isolierenden Aufnahmegehäuses (85, 39a, 39b, 39c, 55, 56) oder einer "Komponente" zugewandt ist, üblicherweise an die Anschlüsse einer elektrischen Komponente oder an die Buchsen eines Verbindungsgehäuses, an dem die Verbindungsanschlüsse ein Mosaik (55a ... 55j, 56a ... 56j) bilden aus Verbindungsbuchsen mit Aussparungen (87a, 87c) oder aus Verbindungsbuchsen mit Vorsprüngen (87b) für jeweils ein Abschnittsende eines Leiterdrahtes oder einer optischen Faser, wobei:
- eine mit Klemmen (2a, 2b ...) versehene Fördereinrichtung (1) intermittierend vorgeschoben wird zum Halten und Ergreifen dieser Enden (3a, 3b ...),
- diese Enden mittels der Klemmen (2a, 2b ...) des Förderers (1) ergriffen, gehalten und um eine bestimmte Strecke (Y', Y) intermittierend vorgeschoben werden,
- gegebenenfalls mittels der Klemmen bestimmte Enden Behandlungseinheiten (4, 20) zugeführt werden, die seitlich entlang der Vorschubstrecke (Y′, Y) angeordnet sind, wobei gegebenenfalls diese Enden durch die Behandlungseinheit verändert werden,
- danach die Reihenfolge einiger dieser Enden am Förderer (1) verändert wird,
- anschließend mittels der Klemmen mehrere der Enden wenigstens einer Verbindungseinheit (32) übergeben werden, welche eine Anordnung (48) zur Aufnahme eines einzelnen Endes aufweist, um dieses mit einem Anschluß einer von ihr bearbeiteten Komponente (39) zu verbinden und mittels dieser Verbindungseinheit (32) bestimmte der einzelnen Enden in die Klemmen am Förderer (1) aufgenommen werden und jede einzeln mit einem vorbestimmten Anschluß einer der Komponenten verbunden wird, wobei sie in einer Reihenfolge aufgenommen werden, die sich von der Reihenfolge unterscheidet, in der diese Enden vom Förderer (1) der Verbindungseinheit (32) zugeführt werden.

2. Verfahren nach Anspruch 1, dadurch gekennzeichnet, daß wenigstens eine Permutationseinheit (21) zur Durchführung der eventuellen Veränderung der Reihenfolge bestimmter Enden am Förderer (1) vorgesehen ist.

3. Verfahren nach Anspruch 2, dadurch gekennzeichnet, daß der Permutationseinheit (21) und dem Förderer (1) leere Klemmen (2p) zugeführt werden, daß mittels dieser Permutationseinheit (21) bestimmte (3m) Enden in andere Klemmen (2m) des Förderers (1), welche diese Enden halten, ergriffen und aufgenommen werden, und daß diese Enden (3m) bestimmten (2p) der leeren Klemmen übergeben werden.

4. Verfahren nach einem der Ansprüche 1 bis 3, dadurch gekennzeichnet, daß die vom Förderer transportierten Klemmen von unterschiedlichen Aufbauten (73, 72, 74) sind.

5. Verfahren nach einem der Ansprüche 2 bis 4, dadurch gekennzeichnet, daß bestimmte (72) der Klemmen das Ergreifen und Halten mehrerer Drähte in einer vorgegebenen Reihenfolge und in einem verringerten Raum ermöglichen.

6. Verfahren nach Anspruch 5, dadurch gekennzeichnet, daß diejenigen Klemmen (72), welche das Ergreifen und Halten mehrerer Drähte in einer vorgegebenen Reihenfolge und in einem verringerten Raum ermöglichen, in den Förderer (1) auf Höhe der Permutationseinheit (21) eingesetzt sind.

7. Verfahren nach einem der vorhergehenden Ansprüche, dadurch gekennzeichnet, daß die Klemmen (2, 73, 72, 34) vom Förderer (1) lösbar sind und mechanisch in diesen einsetzbar oder mechanisch von diesem abtrennbar sind.

8. Verfahren nach Anspruch 7, dadurch gekennzeichnet, daß vom Förderer (1) geleerte Klemmen getrennt werden.

9. Verfahren nach einem der Ansprüche 2 bis 8, dadurch gekennzeichnet, daß die Permutationseinheit (21) bestimmte Enden den Klemmen (72) übergibt, welche mehrere Drähte in einer vorgegebenen Reihenfolge und in einem verringerten Raum ergreifen und halten.

10. Verfahren nach einem der Ansprüche 2 bis 9, dadurch gekennzeichnet, daß eine Steueranordnung (15) vorgesehen ist, zur Steuerung des Betriebes der Permutationseinheit (21) zur Neuordnung der Enden gemäß einer für die Verbindungseinheit (32) vorteilhaften Reihenfolge.

11. Verfahren nach einem der Ansprüche 1 bis 10, dadurch gekennzeichnet, daß mittels der Verbindungseinheit (32) bestimmte Enden am Förderer (1) aufgenommen werden und jedes in vorgegebener Weise mit einem entsprechenden Anschluß einer Komponente (55, 56) verbunden wird, wobei sie in einer Reihenfolge aufgenommen werden, welche immer die Reihenfolge ist, in der die Enden der Verbindungseinheit (32) zugeführt werden.

12. Verfahren nach einem der Ansprüche 1 bis 11, dadurch gekennzeichnet, daß ein anderer Förderer (33) verwendet wird, um bis zu der Stelle (44, 48), an der die Verbindungen der Enden der Anschlüsse oder Buchsen der Komponenten erfolgt, eine Anordnung von Klemmen (34) zu fördern, welche in der Lage sind, wenigstens eine Komponente (39) oder "Komponenten-Klemme" zu ergreifen und zu halten.

13. Verfahren nach Anspruch 12, dadurch gekennzeichnet, daß anschließend jede Komponenten-Klemme (34) wieder verwendet wird.

14. Verfahren nach Anspruch 12, dadurch gekennzeichnet, daß, während die Anschlüsse an der oder den Komponenten (39), die in einer Komponenten-Klemme (34) gehalten wird, durchgeführt werden, diese Komponenten-Klemme vom Zufuhrförderer (1) für die Drahtenden abgenommen wird, so daß mehrere Plätze in Vorschubrichtung auf dem Förderer (1) entstehen, denen Komponenten-Klemmen (34) zugeführt werden können.

15. Verfahren nach einem der Ansprüche 12 bis 14, dadurch gekennzeichnet, daß der Verbindungseinheit (32, 48) und dem anderen Förderer (33) eine Anordnung (44) zugeordnet wird, um wenigstens eine der Komponenten-Klemmen (34) von diesem Förderer (33) abzutrennen und sie der Verbindungseinheit zuzuführen.

16. Verfahren nach einem der Ansprüche 1 bis 15, dadurch gekennzeichnet:
- mehrere Verbindungseinheiten (32) vorgesehen sind, die seitlich entlang der Vorschubstrecke (Y′, Y) vorgesehen sind und
- daß eine Gesamtsteueranordnung (15) vorgesehen ist, welche die Funktionsweise der Verbindungseinheiten (32) dergestalt steuert, daß ein Ende (3a ...) entsprechend einer besonderen der Verbindungseinheiten vom Förderer dieser besonderen Verbindungseinheit zugeführt wird als Funktion eines ersten von der Gesamtsteueranordnung (15) abgegebenen Signals, wobei diese besondere Verbindungseinheit dieses Ende aufnimmt und es mit einer besonderen Komponente (39) verbindet als Funktion eines zweiten von der Gesamtsteueranordnung abgegebenen Signals derart, daß die Enden, die nicht der besonderen Verbindungseinheit entsprechen, diese besondere Verbindungseinheit überspringen.

17. Verfahren nach Anspruch 3, dadurch gekennzeichnet, daß eine zeitweilige Speicheranordnung (72, 89) für die bestimmten Enden (3m) vorgesehen ist, nachdem diese von den anderen Klemmen (2m) des Förderers (1) aufgenommen worden sind und bevor sie den leeren Klemmen (2p) übergeben werden.

18. Verfahren nach Anspruch 17, dadurch gekennzeichnet, daß die zeitweilige Speicheranordnung (72) aus einem Teil der anderen Klemmen besteht.

19. Vorrichtung zur automatischen Verbindung von Enden (3a, 3b ...) von Abschnitten (4a, 4b ..., 57a ... 57j) von Leiterdrähten oder optischen Fasern an jeweils einen Verbindungsanschluß (55a ... 55j, 56a ... 56j) mit Vorsprüngen (87b) oder Aussparungen (87a, 87c), der ihm auf der Vorderseite eines isolierenden Aufnahmegehäuses (87, 39a, 39b, 39c, 55, 56) oder einer "Komponente" zugewandt ist, üblicherweise an die Anschlüsse einer elektrischen Komponente oder an die Buchsen eines Verbindungsgehäuses, an dem die Verbindungsanschlüsse ein Mosaik (55a ... 55j, 56a ... 56j) bilden, aus Verbindungsbuchsen mit Aussparungen (87a, 87c) oder aus Verbindungsbuchsen mit Vorsprüngen (87b) für jeweils ein Abschnittsende eines Leiterdrahtes einer optischen Faser, gemäß dem Verfahren nach einem der Ansprüche 1 bis 18, mit:
- einem Förderer (1, 33) mit Klemmen (2a, 2b ...), um die Enden entlang einer Vorschubstrecke (Y′, Y) zu verschieben,
- einer ersten Betätigungsanordnung (21) mit einer Greifanordnung (22, 23) und mit einer Anordnung (25) zur punktweisen Verschiebung der Fördereinrichtung (1), derart, daß die erste Betätigungsanordnung (21) mit jeder Greifanordnung (22, 23) ein einzelnes Ende (3m) ergreifen kann, das in einer der Klemmen (2m) des Förderers (1) gehalten wird, um diese Klemme zu öffnen und das Ende aus der Klemme (2m) freizugeben, die dadurch geleert wird und um nach einer Verschiebung dieses einzelne Ende (3m) in eine andere leere Klemme (2b) des Förderers (1) einzuführen, und
- wenigstens einer zweiten Betätigungsanordnung (32) als Verbindungsbetätigungsanordnung, die entlang der Vorschubstrecke (Y′, Y) nach der ersten Betätigungsanordnung (21) vorgesehen ist und mit einer Anordnung (48) versehen ist, um ein einzelnes Ende aufzunehmen und mit einem der Anschlüsse oder Buchsen der Komponente oder der Komponenten (39) zu verbinden, die im Betätigungsfeld der Verbindungsbetätigungsanordnung (32) vorgesehen sind.

20. Vorrichtung nach Anspruch 19, dadurch gekennzeichnet, daß sie eine Anordnung (58a, 58b) aufweist zum Abbiegen der Drähte, die mit der Seite verbunden sind, welche derjenigen mit den noch zu verbindenden Anschlüssen oder Buchsen gegenüberliegt.

21. Vorrichtung nach einem der Ansprüche 19 oder 20, dadurch gekennzeichnet, daß die verwendeten Klemmen (72, 73, 74, 34) wenigstens von zwei unterschiedlichen Aufbauten sind, wobei alle die gleiche Verbindungsanordnung (43) für den Förderer (1) oder die Förderer (1, 33) tragen sowie eine automatisch lesbare Beschriftung (43c) für die Typerkennung und eine Anordnung (43c, 15), um sie je nach der Art ihres Aufbaus zu sortieren.

22. Vorrichtung nach Anspruch 21, dadurch gekennzeichnet, daß wenigstens eine Klemme (72) verwendet wird, um mehrere Drahtenden zu ergreifen und zu halten, wobei diese Klemme eine Anordnung von Stäben (70) aufweist, die in einem punktförmigen Muster angeordnet sind, um die Drähte zu halten.

23. Vorrichtung nach Anspruch 22, dadurch gekennzeichnet, daß der Abstand der Achsen der Stäbe (70), die beidseits der Drähte angeordnet sind, kleiner ist als die Länge, die dem Durchmesser der Stäbe entspricht, vergrößert um den Durchmesser des zu haltenden Drahtes mit dem kleinsten Durchmesser.

24. Vorrichtung nach Anspruch 22 oder 23, dadurch gekennzeichnet, daß die Stäbe (70) so geformt sind, daß sie nach innen hin abgeschrägt sind.

25. Vorrichtung nach einem der Ansprüche 19 bis 24, dadurch gekennzeichnet, daß wenigstens eine Klemme (34) verwendet wird, um wenigstens eine Komponente (39a, 39b, 39c) zu halten, wobei diese "Komponenten-Klemme" (34) eine ebene rechtwinklige Platte (84) aufweist mit einer Anordnung (85), um jede Komponente (33) in einer zur Platte (84) vorgegebenen Stellung zu befestigen, so daß die entsprechenden Buchsen der Komponenten senkrecht zur Platte ausgerichtet sind.

26. Vorrichtung nach Anspruch 25, dadurch gekennzeichnet, daß alle Komponenten-Klemmen (34) identisch sind und daß jede Komponente (39) in eine Paßbuchse (85) eingesetzt ist, welche eine Standardanordnung aufweist zur Befestigung in der Klemme sowie spezielle Befestigungsanordnungen für die Komponenten.

27. Vorrichtung nach einem der Ansprüche 25 oder 26, dadurch gekennzeichnet, daß der Zugang zu den Verbindungsanschlüssen und -buchsen der Komponenten nicht nur von der Einführseite für die Enden in die Komponenten möglich ist, sondern auch von der gegenüberliegenden Seite (86) der Komponenten.

28. Vorrichtung nach einem der Ansprüche 19 bis 27, dadurch gekennzeichnet, daß die Fördereinrichtung (1) aus der benachbarten Anordnung zweier Förderer besteht, die einen Übergang der Klemmen von dem einen zum anderen ermöglichen und die unabhängig voneinander mit je einem Antrieb versehen sind.

29. Vorrichtung nach Anspruch 28, dadurch gekennzeichnet, daß die benachbarte Anordnung der beiden Förderer gegenüber einer der letzten Stellungen erfolgt, die durch die Permutationseinheit (21) belegt ist und daß eine Auswurfanordnung für die Klemmen dem hinteren Ende des ersten Förderers zugeordnet ist.

## Claims

1. Process for automatically connecting ends (3a, 3b...) of sections (4a, 4b...., 57a...57j) of conductor wires or of optical fibers to, for each end respectively, a connecting terminal (55a...55j, 56a...56j), male (87b) or female (87a, 87c), which is allocated thereto on the front face of an insulating receiver casing (85, 39a, 39b, 39c, 55, 56), or "component", typically to terminals of an electrical component or to recesses of a connector housing, on which these connecting terminals form a mosaic (55a...55j, 56a...56j) of female recesses (87a, 87c) or of male terminals (87b) for respective connection of an end of section of conductor wire or of optical fiber, this process being of the type wherein:
- a transfer conveyor (1) provided with clamps (2a, 2b...) is advanced by intermittence to hold and grasp said ends (3a, 3b...),
- these ends are grasped, held and displaced by intermittence along a certain transfer path (Y′, Y) by means of said clamps (2a, 2b...) of this conveyor (1),
- certain of these ends are possibly presented by means of these clamps to processing units (4, 20) which are disposed laterally along said transfer path (Y′, Y) and these ends are possibly modified by means of these processing units,
- the order of certain of these ends on this conveyor (1) is then modified,
- a plurality of said ends are then presented, by means of these clamps, to at least one connection unit (32) which comprises means (48) for taking a said sole end and for connecting it to a terminal of one of said components (39) that it processes and, by means of this connection unit (32), certain of said sole ends are taken in said clamps on said conveyor (1) and are each connected to a predetermined terminal of one of said components (39), taking them in an order which may be different from the order in which these ends are fed by said conveyor (1) to said connection unit (32).

2. Process according to Claim 1, characterized in that at least one interchange unit (21) is used for effecting said possible modification of the order of certain of these ends on this conveyor (1).

3. Process according to Claim 2, characterized in that empty clamps (2p) are fed to said interchange unit (21) and on this conveyor (1), certain (3m) of said ends are grasped and taken by means of this interchange unit (21) in other clamps (2m) of said conveyor (1) which bear these ends, and these ends (3m) are transferred in certain (2p) of said empty clamps.

4. Process according to one of Claims 1 to 3, characterized in that the clamps transported by said conveyor are of various types (73, 72, 74).

5. Process according to any one of Claims 2 to 4, characterized in that certain (72) of said clamps make it possible to grasp and hold a plurality of wires in a given order and in a limited space.

6. Process according to Claim 5, characterized in that said clamps (72) of the type which enable a plurality of wires to be grasped and held in a given order and in a limited space are introduced on the conveyor (1) at the level of the interchange unit (21).

7. Process according to any one of the preceding Claims, characterized in that the clamps (2, 73, 72, 34) are separable from the conveyor (1) and may be mechanically engaged thereon or mechanically withdrawn therefrom.

8. Process according to Claim 7, characterized in that unloaded clamps are withdrawn from the conveyor (1).

9. Process according to one of Claims 2 to 8, characterized in that the interchange unit (21) transfers certain of said ends in clamps (72) making it possible to grasp and hold a plurality of wires in a given order and in a limited space.

10. Process according to one of Claims 2 to 9, characterized in that a control device (15) is provided which controls operation of said interchange unit (21) to rearrange the ends in a preferential order for said connection unit (32).

11. Process according to one of Claims 1 to 10, characterized in that certain of said ends on said conveyor (1) are taken by means of the connection unit (32) and they are each connected in predetermined manner to a respective terminal of a component (55, 56), taking them in an order which is always the order in which said ends are fed to said connection unit (32).

12. Process according to one of Claims 1 to 11, characterized in that another conveyor (33) is used for conveying, up to the place (44, 48) where the connections of said ends on said terminals or recesses of said components are effected, an assembly of clamps (34) adapted to grasp and hold at least one component (39), or "component-clamp".

13. Process according to Claim 12, characterized in that each component-clamp (34) is then recycled.

14. Process according to Claim 12, characterized in that, when connections on the or each component (39) held by a component-clamp (34) are effected, this component-clamp on the conveyor (1) feeding said ends of wires is evacuated, empty places (53E) consequently being provided in advance on this conveyor (1) in order to be able to transfer these component-clamps (34) thereto.

15. Process according to one of Claims 12 to 14, characterized in that there are associated with the connection unit (32, 38) and with said other conveyor (33) means (44) for withdrawing at least one of said component-clamps (34) from this conveyor (33) and for presenting it to this connection unit.

16. Process according to one of Claims 1 to 15, characterized:
. in that a plurality of connection units (32) are disposed laterally along said transfer path (Y′, Y),
. and in that there is provided an overall control device (15) which controls operation of said connection units (32) so that one end (3a...) corresponding to a particular one of said connection units is presented by said conveyor to said particular connection unit in response to a first signal emitted by said overall control device (15) and said particular connection unit takes said end and connects it to a particular component (39) in response to a second signal emitted by said overall control device and with the result that the ends which do not correspond to said particular connection unit skip this particular connection unit.

17. Process according to Claim 3, characterized in that means (72, 89) are provided for temporarily storing said certain ends (3m), after having taken them in said other clamps (2m) of said conveyor (1) and before transferring them into said empty clamps (2p).

18. Process according to Claim 17, characterized in that temporary storage means (72) are used which form part of said other clamps.

19. Device for automatically connecting ends (3a, 3b...) of sections (4a, 4b..., 57a... 57j) of conductor wires or of optical fibers to, for each end respectively, a connecting terminal (55a...55j, 56a...56j), male (87b) or female (87a, 87c), which is allocated thereto on the front face of an insulating receiver casing (85, 39a, 39b, 39c, 55, 56), or "component", typically to terminals of an electrical component or to recesses of a connector housing, on which these connecting terminals form a mosaic (55a...55j, 56a...56j) of female recesses (87a, 87c) or of male terminals (87b) for respective connection of an end of section of conductor wire or of optical fiber, according to the process of one of Claims 1 to 19, comprising:
- a conveyor (1, 33) provided with clamps (2a, 2b) making it possible to transport said ends along a certain transfer path (Y′, Y),
. a first manipulator (21) provided with at least one gripping means (23, 23) and equipped with means (25) for displacing it from one point of the transfer conveyor (1) to another, with the result that this first manipulator (21) may grasp with each of said gripping means (22, 23) one sole end (3m) held by one of the clamps (2m) of the conveyor (1) then open said clamp and release said end from said clamp (2m) which becomes empty then move and engage this sole end (3m) in another empty clamp (2p) of said conveyor (1),
. at least one second manipulator (32) called connection manipulator, disposed along the transfer path (Y′, Y), downstream of the first manipulator (21) and equipped with means (48) for taking one said sole end and for connecting it on one of the terminals or recesses of the or each component (39) disposed in the field of action of said connection manipulator (32).

20. Device according to Claim 19, characterized in that it comprises means (58a, 58b) for folding the connected wires on the side opposite that of the terminals or recesses remaining to be connected.

21. Device according to one of Claims 19 or 20, characterized in that the clamps that it uses (72, 73, 74, 34) are at least of two different types and all comprise the same means (43) to interface with said (1) or said (1, 33) conveyors, and an automatically legible inscription (43c) making it possible to know their type, means (43c, 15) being provided to sort them as a function of their type.

22. Device according to Claim 21, characterized in that it uses at least one clamp (72) for grasping and holding a plurality of wire ends, this clamp comprising an assembly of rods (70) disposed in quincunx to hold the wires.

23. Device according to Claim 22, characterized in that the distance between axes of the rods (70) disposed on either side of the wires is less than the length represented by the diameter of these rods increased by the diameter of the wire of smallest diameter that it must hold.

24. Device according to Claim 22 or Claim 23, characterized in that the rods (70) are cut in an inward taper.

25. Device according to one of Claims 19 to 24, characterized in that it uses at least one clamp (34) to hold at least one component (39a, 39b, 39c), or "component-clamp", this clamp (34) comprising a flat rectangular panel (84) comprising means (85) for fixing each component (39) in a well determined position of said panel (84) so that the adapted recesses of said components are perpendicular to said panel.

26. Device according to Claim 25, characterized in that all the component-clamps (34) are identical and in that each component (39) is placed in an adaptor recess (85) which comprises the standard means for being fixed on said clamp and the fixation means specific to said component.

27. Device according to one of Claims 25 or 26, characterized in that access to the connection terminals and recesses of the components is possible not only on the side of introduction of the ends in said components, but also on the opposite side (86) of said components.

28. Device according to one of Claims 19 to 27, characterized in that said transfer conveyor (1) is made by juxtaposition of two conveyors placed in succession and which allow the clamps to be transferred from one to the other and which are motorized independently of each other.

29. Device according to Claim 28, characterized in that the two conveyors are juxtaposed opposite one of the last positions covered by the interchange unit (21) and in that a device for ejecting the clamps is associated with the downstream end of the first conveyor.
